# EUROPEAN PATENT SPECIFICATION

(11) **EP 4 630 662 B1**
(45) Date of publication and mention of the grant of the patent: **24.06.2026**
(21) Application number: 23824953.6
(22) Date of filing: 05.12.2023
(51) Int. Cl.: F01M 13/00, F01M 13/02, F01M 13/04, F02D 41/00, B01D 45/08, B01D 45/12, F02D 19/02

(54) **INTERNAL COMBUSTION ENGINE**
BRENNKRAFTMASCHINE
MOTEUR À COMBUSTION INTERNE

(30) Priority: 05.12.2022 GB 202218257; 22.09.2023 GB 202314608
(43) Date of publication of application: 15.10.2025
(73) Proprietor: JCB Research, Uttoxeter, Staffordshire ST14 5JP (GB)
(72) Inventor: RANDLES, Thomas, Uttoxeter Staffordshire ST14 5JP (GB); ANTON, Vladimir, Uttoxeter Staffordshire ST14 5JP (GB)
(74) Representative: Foot, Paul Matthew James
(86) International application number: PCT/GB2023/053139
(87) International publication number: WO 2024/121549

(56) References cited:
- EP-A2- 2 431 582
- WO-A1-2021/161610
- DE-A1- 102022 115 404
- DE-B4- 102017 201 896
- JP-A- 2009 222 043
- JP-A- 2013 177 862
- JP-A- 2015 166 564
- KR-A- 20130 095 867
- KR-A- 20190 083 523
- US-A1- 2002 081 919
- US-A1- 2013 067 873
- US-A1- 2019 048 805

## Description

### FIELD

The present teachings relate to an internal combustion engine, in particular to a gaseous fuel internal combustion engine. Additionally, the present teachings relate to an oil pre-separator and to an oil separation system.

### BACKGROUND

In internal combustion engines, it is common for air and fuel in the combustion chamber of a cylinder, as well as combustion gases formed in the combustion chamber, to flow out of the combustion chamber past the piston to a limited degree and into the engine's crankcase. Such gas is commonly known as blow-by gas.

In engines powered by a gaseous fuel such as hydrogen, accumulation of the gaseous fuel component of the blow-by gases in the crankcase can pose a problem if not adequately ventilated. This is due to the relatively high flammable range of some gaseous fuels (e.g. hydrogen is flammable in air in concentrations of between 4 and 75%). Unless the blow-by gases are ventilated such that the concentration of gaseous fuel in the crankcase is below its lower flammability limit, there is a risk that the gaseous fuel in the crankcase could ignite, potentially damaging the engine and its surroundings. It is also possible for the gaseous fuel to then ignite the lubricating oil in the crankcase, causing further combustion to occur.

A transition is underway to lower or zero-carbon fuel sources to meet the demands of environmental legislation. The present inventor(s) have recognised that for a transitional period, in certain applications, e.g. off-highway machinery such as construction and agricultural working machines, and electric generators, conventional fuel (typically diesel) internal combustion engine versions of the working machines will be manufactured alongside alternative fuelled machines, such as those fuelled by hydrogen. It can be costly and inefficient to manufacture multiple versions of the machines if the overall structure of the engines differs, and the engines have different space envelopes requiring different packaging into the machines when assembled.

Diesel powered engines have a lower requirement for ventilation of blow-by gas. Therefore, if designing a base engine capable of running on diesel or hydrogen, it may be problematic to package a Crankcase Ventilation System (CCV System) that meets the needs of hydrogen fuel without making the overall engine bulkier than its diesel fuelled counterpart. An example of a ventilation system for an engine is described in US2002/081919 A1.

The present teachings seek to overcome or at least mitigate one or more problems associated with the prior art.

### SUMMARY

According to the present invention, there is provided a gaseous fuel internal combustion engine as set out in independent claim 1. Optional features are set out in the dependent claims.

According to a first aspect of the present teachings, there is provided a gaseous fuel internal combustion engine comprising: a crankcase; and a ventilation system or a pump configured to expel blow-by gas contained within the crankcase.

The engine may comprise an engine structure. The engine structure may comprise: the crankcase; and a cylinder head coupled to one or more cylinders. The ventilation system may comprise a gas pressure source and a ventilation path. The gas pressure source may be configured to transport ventilation gas along the ventilation path from a gas inlet to the crankcase, and to transport a combination of the ventilation gas and a blow-by gas including the gaseous fuel from the crankcase via a separate outlet as an expelled gas.

The ventilation path may be configured to transport ventilation gas from the gas inlet to the cylinder head and then to the crankcase.

Advantageously, transporting ventilation gas from the gas inlet to the crankcase via the cylinder head helps to reduce the concentration of blow-by gas in the cylinder head, and thus reduces the exposure of components in the cylinder head to the blow-by gas. By reducing the exposure of the components in the cylinder head to the blow-by gas, the risk of exposure-related damage to these components (e.g. via hydrogen embrittlement) is reduced.

The gas pressure source may be a pump.

Advantageously, using a pump as the gas pressure source may enable greater control of the flowrate of the expelled gas. Moreover, providing the gas pressure source as a pump may enable greater flexibility for where the pump can be located in the engine.

The pump may comprise an impeller rotatable about an axis. The axis may be arranged to be substantially vertical in a normal operating orientation of the engine. For example, the axis of the impeller may be substantially parallel to an axis of the one or more cylinders.

Advantageously this orientation of impeller may assist in the drainage of oil from the pump.

The gas pressure source may comprise two pumps.

The two pumps may be arranged in parallel.

Advantageously this may ensure that the flow of gases through the pumps is shared substantially equally so the pump load is substantially even.

The two pumps may be symmetrically arranged with respect to a flow divider upstream thereof.

The ventilation path may comprise one or more gas flow passages in the engine structure for transporting ventilation gas from the cylinder head to the crankcase.

Advantageously, such a ventilation path may help to reduce the concentration of blow-by gas in the engine structure. Moreover, such a ventilation path negates the need to use piping external to the engine to transport ventilation gas to the crankcase, which may be at a greater risk of damage.

The ventilation path may comprise a plurality of the gas flow passages distributed across the crankcase.

Advantageously, such a ventilation path helps to increase the flowrate of ventilation gas that can be transported to the crankcase. Moreover, distributing the gas flow passages across the crankcase helps to distribute the ventilation gas throughout the crankcase.

The one or more gas flow passages may comprise one or more oil drain passages for draining oil from the cylinder head to the crankcase.

Advantageously, using one or more oil drain passages as gas flow passages helps to flush blow-by gas from an increased volume of the engine structure. Moreover, it helps to simplify manufacture of the engine, since the engine may not need to be designed to include dedicated gas flow passages between the cylinder head and the crankcase.

The one or more gas flow passages may include all oil drain passages in the cylinder head.

Advantageously, including all oil drain passages in the cylinder head helps to increase the flowrate of ventilation gas that can be transported to the crankcase and may avoid the build-up of pockets of flammable blow-by gas.

The engine structure may further comprise a cylinder block including the one or more cylinders. The cylinder block may comprise oil drain passages therein. The one or more gas flow passages may comprise the oil drain passages of the cylinder block downstream of the cylinder head and upstream of the crankcase.

The engine may further comprise a rocker cover mounted to the cylinder head. The ventilation path may pass through the rocker cover to the cylinder head.

Advantageously, passing the ventilation path through the rocker cover may help to reduce the concentration of blow-by gas between the rocker cover and the cylinder head.

The rocker cover may comprise a baffle configured to disperse a flow of ventilation gas transported along the ventilation path substantially across the cylinder head.

Advantageously, the baffle may help to distribute the ventilation air to gas flow passages leading to the crankcase distributed across the cylinder head. Moreover, the baffle may help to inhibit the ventilation gas from interfering with lubrication of components housed in the rocker cover.

The rocker cover may comprise a single rocker cover inlet in the ventilation path. The gas pressure source may be configured to transport ventilation gas along the ventilation path from the gas inlet to the rocker cover inlet and then to the cylinder head.

Advantageously, such a configuration of the rocker cover and ventilation path helps to simplify manufacture of the engine.

The outlet may comprise an outflow portion of the ventilation path. A section of the outflow portion may be arranged in the engine structure.

Advantageously, such a configuration of the outflow portion may help to inhibit the blow-by gas from freezing due to the increased temperature of the engine structure during operation. This is especially beneficial when the gaseous fuel is hydrogen, since the blow-by gas is likely to include a higher concentration of water vapour as a by-product of hydrogen combustion.

The outflow portion may terminate above the one or more cylinders.

The engine structure may further comprise a gearcase, a cylinder block and a rocker cover. The outflow portion may pass through one or more of the gearcase, the cylinder block, the cylinder head and the rocker cover.

Advantageously, such a configuration may help to improve the packaging of the outflow portion and may avoid the need for pipework external of the engine that may be prone to damage.

The outflow portion may pass in series through at least the cylinder block, the cylinder head and the rocker cover.

Advantageously, such a configuration may help to improve the packaging of the outflow portion.

The outflow portion may pass through the cylinder head.

Advantageously, such a configuration may help to improve the packaging of the outflow portion.

The gas pressure source may be configured to induce a below-atmospheric pressure in the crankcase; optionally, in the range of -100 to -10 mbar relative to atmospheric pressure; for example, -80 to -20 mbar relative to atmospheric pressure.

Advantageously, inducing a below-atmospheric pressure in the crankcase helps to inhibit the blow-by gas from flowing from the crankcase to other parts of the engine via routes separate to the outlet.

The gas pressure source may be downstream of the crankcase.

The ventilation system may comprise an oil separator configured to reduce a concentration of oil in the expelled gas transported from the crankcase.

Advantageously, the oil separator may help to remove oil in the expelled gas prior to it being exhausted to atmosphere, or supplied to the one or more cylinders of the engine. This may, have environmental and/or emissions benefits, and also may reduce the amount of oil consumed by the engine, saving costs in replacement.

The engine may further comprise an oil passage arranged to transport oil removed from the expelled gas by the oil separator to the crankcase.

The oil separator may be a passive oil separator.

Advantageously, such an oil separator may help to reduce the parasitic losses of the engine.

The oil separator may be a cyclonic oil separator.

The oil separator may be a labyrinth oil separator.

The oil separator may be arranged downstream of the gas pressure source.

Advantageously, such an arrangement of the oil separator and gas pressure source may aid oil removed from the expelled gas by the oil separator to be returned to the crankcase.

The oil separator may be mounted to the gas pressure source.

An inlet to the oil separator may be arranged below an outlet of the gas pressure source.

Advantageously this may assist in the separation of oil from the expelled gas.

An outlet of the oil separator may be above an inlet of the oil separator.

Advantageously this may assist in the separation of oil from the expelled gas.

The gas pressure source may be downstream of the crankcase. The ventilation system may comprise an oil pre-separator upstream of the gas pressure source and/or the oil separator. The oil pre-separator may be configured to reduce a concentration of oil in the expelled gas transported from the crankcase to the gas pressure source and/or oil separator.

Advantageously, the oil pre-separator may help to reduce the amount of oil in the expelled gas flowing through gas air pressure source, which may help to increase the efficiency of, and/or reduce damage to, the gas pressure source.

In addition, certain oil separators may work more efficiently when the oil concentration at their inlet is below a certain level, and so the combination of a pre-separator and a separator may be particularly efficient at oil removal.

The oil pre-separator may be a passive oil pre-separator.

The oil pre-separator may comprise one or more baffles.

The engine may further comprise an intake system configured to supply air to the one or more cylinders. The ventilation system may be configured to transport the expelled gas to the intake system for supply to the one or more cylinders via the outlet, e.g. via an outflow portion of the ventilation path.

Advantageously, such a configuration of the intake system and ventilation system may help to improve the fuel efficiency of the engine and/or reduce emissions.

The gas inlet may be in fluid communication with a supply of air. The intake system may comprise an intake passage arranged to transport air from the gas inlet to the one or more cylinders. The ventilation system may be configured to draw air as the ventilation gas into the ventilation path from the intake passage at a first location.

Advantageously, such a configuration of the intake system and ventilation system negates the need for a separate dedicated gas inlet for the ventilation system.

In embodiments where the engine comprises a rocker cover mounted to the cylinder head, the first location of the intake passage may be positioned adjacent the rocker cover. The ventilation path may pass through the rocker cover.

Advantageously, such a configuration of the rocker cover and the intake passage may help to reduce the length of exposed piping external to the engine structure between the first location and the rocker cover, which may otherwise be at a higher risk of damage and/or freezing in low ambient temperatures.

The engine may further comprise a compressor along the intake passage. The first location may be upstream of the compressor.

Advantageously, such a configuration of the compressor and the ventilation system may help to reduce the pressure of ventilation air flowing along the ventilation path towards the crankcase, and thus may help the gas pressure source to induce a below-atmospheric pressure in the crankcase.

The compressor may be a turbocharger or a supercharger.

The gas pressure source may be configured to induce a lower pressure in the crankcase relative to a pressure at an inlet to the compressor.

The compressor may be configured to induce a pressure at the inlet to the compressor of -60 to 0 mbar relative to atmospheric pressure.

The ventilation system may be configured to exhaust the expelled gas from the outlet, e.g. via an outflow portion of the ventilation path, to a second location of the intake passage. The second location may be downstream of the first location with respect to the intake passage.

Advantageously, such a configuration of the intake system and ventilation system inhibits expelled gas exhausted into the intake passage from flowing along the ventilation path to the crankcase.

The second location may be upstream of the compressor with respect to the intake passage.

In embodiments in which the engine comprises a rocker cover mounted to the cylinder head, the second location of the intake passage may be positioned adjacent the rocker cover. The outlet may comprise an outlet passage passing through the rocker cover.

Advantageously, such a configuration of the rocker cover and the intake passage may help to reduce the length of exposed piping external to the engine structure between the second location and the rocker cover, which may otherwise be at a higher risk of damage and/or freezing in low ambient temperatures.

The gas inlet may comprise a filter.

Advantageously, the filter helps to prevent dust, debris and the like from entering the cylinder head and the crankcase.

The gaseous fuel may be hydrogen. The internal combustion engine may be fuelled substantially exclusively by hydrogen.

Advantageously, hydrogen produces fewer harmful emissions compared to some other gaseous fuels.

The ventilation system may comprise a gas pressure source configured to transport ventilation gas from a gas inlet to the crankcase via a ventilation path. The gas pressure source may be configured to induce a below-atmospheric pressure in the crankcase.

The negative pressure may be in the range of -100 to -10 mbar relative to atmospheric pressure; optionally, -80 to -20 mbar relative to atmospheric pressure.

The gas pressure source may be downstream of the crankcase.

The gas pressure source may be a pump.

The engine may comprise an engine structure. The engine structure may comprise the crankcase. The ventilation system may comprise a gas pressure source and a ventilation path. The gas pressure source may be configured to transport ventilation gas along an inflow portion of the ventilation path from a gas inlet to the crankcase, and to transport a combination of the ventilation gas and a blow-by gas including the gaseous fuel from the crankcase via a separate outlet as an expelled gas. The outlet may comprise an outflow portion of the ventilation path. At least a section of the inflow portion and/or at least a section of the outflow portion may be housed within the engine structure.

The engine structure may comprise a cylinder head coupled to one or more cylinders. A section of the inflow portion and/or a section of the outflow portion may pass through the cylinder head.

The engine structure may comprise a cylinder block comprising the one or more cylinders. The cylinder head may be mounted to the cylinder block. A section of the inflow portion and/or a section of the outflow portion may pass through the cylinder block.

The engine structure may further comprise a rocker cover mounted to the cylinder head. A section of the inflow portion and/or a section of the outflow portion may pass through the rocker cover.

The engine may further comprise a gearcase. The outflow portion may commence at the gearcase.

In embodiments where the gas pressure source is a pump, the pump may be configured to transport blow-by gas including the gaseous fuel contained within the crankcase therefrom to an outlet. The engine may comprise a controller configured to control the pump output based on one or more determined operating parameters of the engine.

Advantageously, controlling the pump output based on the one or more determined operating parameters of the engine enables the flowrate of the blow-by gas to be controlled such that the concentration of gaseous fuel in the crankcase is below its lower flammability limit across the operational range of the engine, whilst minimising engine parasitic losses.

The one or more determined operating parameters may include one or more of an engine speed, and an engine torque.

Advantageously, such operating parameters of the engine have been found to indicate the flowrate of blow-by gas flowing into the crankcase.

The controller may be configured to control the pump based on the one or more determined operating parameters via a look-up table or a map stored in a memory.

Advantageously, controlling the pump via a look-up table or map helps simplify control of the pump by the controller.

The pump may be a variable speed pump. The controller may be configured to control a speed of the pump based on the one or more determined operating parameters.

Advantageously, controlling the speed of the pump may help to ensure that the flowrate of the blow-by gas is accurately controlled.

The controller may be configured to determine a setpoint pump speed based on the one or more determined operating parameters. The controller may be configured to control the speed of the pump to correspond substantially to the setpoint pump speed.

Advantageously, such a configuration of the controller enables a pump speed to be implemented by the controller which helps ensure that the concentration of gaseous fuel in the crankcase is below its lower flammability limit.

The controller may be configured to control the pump output based on a setpoint flowrate of the expelled gas downstream of the crankcase or ventilation gas upstream of the crankcase or based upon a setpoint parameter indicative of flowrate of expelled gas downstream of the crankcase or ventilation gas upstream of the crankcase.

Advantageously, controlling the pump output based on a determined flowrate of the expelled or ventilation gas, or a parameter indicative of expelled gas or ventilation gas may help to provide more accurate control of the flowrate of the expelled/ventilation gas and thus the hydrogen concentration in the crankcase.

The controller may be configured to determine a setpoint parameter indicative of flowrate of expelled gas downstream of the crankcase or ventilation gas upstream of the crankcase. The controller may be configured to monitor an actual parameter indicative of the flowrate of expelled gas downstream of the crankcase or ventilation gas upstream of the crankcase. The controller may be configured to control the pump output such that the actual parameter indicative of the flowrate corresponds substantially to the setpoint parameter indicative of the flowrate.

Advantageously, by feeding back the monitored actual parameter indicative of flowrate to the controller in closed-loop, the controller may help to provide more accurate control of the flowrate of the expelled/ventilation gas and thus the hydrogen concentration in the crankcase.

The controller may be configured to output an alert signal when the difference between an actual value and a setpoint value exceeds a predetermined threshold, for example when the difference between the actual value of flowrate and the setpoint value of the flowrate is greater than a predetermined threshold, or the actual parameter indicative of flowrate and the setpoint parameter indicative of flowrate is greater than a predetermined threshold.

Advantageously, such a configuration of the controller may help to monitor for obstructions or blockages (e.g. due to ice formation) in the flow path of the blow-by gas.

The engine may be configured to shutdown when the controller outputs the alert signal.

The parameter indicative of flowrate may correspond to a pressure differential of the expelled gas or ventilation gas.

Advantageously, a pressure differential of the expelled gas or ventilation may be determined via relatively low-cost sensors (e.g. pressure transducers).

The pressure differential of the expelled gas or ventilation gas may correspond to a pressure differential across a flow restrictor in a flow path of ventilation gas upstream or expelled gas downstream of the crankcase.

Advantageously, determining the pressure differential of the expelled gas or ventilation gas across a flow restrictor enables an accurate flowrate of the said gas to be determined.

The flow restrictor may be downstream of the pump.

The engine may further comprise a first pressure take-off and a second pressure take-off. The pressure differential may correspond to the pressure difference between the first and second pressure take-offs. The first pressure take-off may be spaced upstream from the flow restrictor. The second pressure take-off may be spaced downstream from the flow restrictor.

Advantageously, such a configuration of the first and second pressure take-offs may help to increase the measured pressure differential, which may help determine a more accurate flowrate.

The flow restrictor may be downstream of the pump. The first pressure take-off may be adjacent an outlet of the pump.

A distance along a flow path between the first and second pressure take-offs may be at least two (e.g. three or more, or four or more) times greater than a distance along the flow path between an inlet and an outlet of the flow restrictor.

The flow restrictor may be an oil separator configured to reduce a concentration of oil in the expelled gas downstream of the crankcase.

Advantageously, using an oil separator as the flow restrictor negates the need for a separate flow restrictor in the flow path of the expelled gas.

The oil separator may comprise an inlet and an outlet. The inlet may comprise a first pressure take-off and the outlet may comprise a second pressure take-off. The pressure differential may correspond to the pressure difference between the first and second pressure take-offs.

The controller may determine a maximum setpoint pump speed or a maximum setpoint flowrate when the one or more determined operating conditions correspond to a maximum output torque of the engine and/or speed of the engine.

Advantageously, it has been found that the maximum flowrate of blow-by gas into the crankcase substantially corresponds to the maximum output torque and/or speed of the engine. Thus, determining such a maximum setpoint pump speed helps to provide efficient control of the flowrate of the expelled gas across the operational envelope of the engine.

The maximum output torque of the engine may be at an engine speed of the engine in the range of 1000 to 2500 RPM, optionally in the range of 1100 to 1400 RPM, for example, approximately 1150 to 1200 RPM.

The pump may be an electric pump.

The pump may be a side channel pump.

The pump may be positioned downstream of the crankcase, such that the pump induces a below-atmospheric pressure in the crankcase.

The pump may be configured to induce a pressure in the crankcase in the range of -100 to -10 mbar relative to atmospheric pressure, optionally, -80 to -20 mbar relative to atmospheric pressure.

Advantageously, inducing a below-atmospheric pressure in the crankcase helps to inhibit the blow-by gas from flowing from the crankcase to other parts of the engine via routes separate to the outlet.

The ventilation system may comprise a gas pressure source and a ventilation path. The gas pressure source may be configured to transport blow-by gas, including the gaseous fuel, contained within the crankcase therefrom via the ventilation path as an expelled gas. The ventilation system may further comprise a monitoring system configured to monitor an actual parameter indicative of a flowrate of the expelled gas. The monitoring system may be configured to provide one or more outputs based on the monitored actual parameter.

Advantageously, monitoring the flowrate of the expelled gas may enable a determination of whether the concentration of gaseous fuel in the crankcase is above its lower flammability limit, without requiring a gas concentration sensor in the crankcase. Moreover, by monitoring the flowrate of the expelled gas, it may be determined whether there are any blockages or obstructions (e.g. due to ice formation) in the ventilation path, which may lead to an unexpected increase in the concentration of gaseous fuel in the crankcase.

The monitored actual parameter may correspond to a pressure differential between first and second portions of the ventilation path. The first and second portions may both be in the inflow portion, or both be in the outflow portion.

Advantageously, such a pressure differential may be determined via relatively low-cost sensors (e.g. pressure transducers).

The ventilation path may comprise a flow restrictor configured to induce the pressure differential.

Advantageously, using a flow restrictor to induce the pressure differential may enable an accurate flowrate of the expelled gas to be determined.

The monitoring system may comprise a first pressure take-off point and a second pressure take-off point in the ventilation path. The pressure differential may correspond to the pressure difference between the first and second pressure take-off points. The first pressure take-off point may be spaced upstream from the flow restrictor. The second pressure take-off point may be spaced downstream from the flow restrictor.

Advantageously, such a configuration of the first and second pressure take-offs may help to increase the measured pressure differential, which may help determine a more accurate flowrate.

The flow restrictor may be downstream of the gas pressure source. The first pressure take-off point may be adjacent an outlet of the gas pressure source.

A distance along the ventilation path between the first and second pressure take-off points may be at least two (e.g. three or more, or four or more) times greater than a distance along the ventilation path between an inlet and an outlet of the flow restrictor.

The flow restrictor may be an oil separator configured to reduce a concentration of oil in the expelled gas in the ventilation path.

Advantageously, using an oil separator as the flow restrictor negates the need for a separate flow restrictor in the ventilation path.

The oil separator may be a passive oil separator.

Advantageously, such an oil separator may help to reduce the parasitic losses of the engine. Moreover, using a passive oil separator may help simplify a determination of the flowrate of the expelled gas based on the pressure differential compared to an active oil separator.

The oil separator may be a cyclonic oil separator configured to form a vortex in the expelled gas travelling between an inlet portion and an outlet portion thereof such that oil carried by the expelled gas is separated therefrom. The cyclonic oil separator may induce a pressure drop between the inlet portion and the outlet portion.

Advantageously, use of a cyclonic oil separator allows the oil separator to be a passive component, thus reducing complexity of the system and avoiding the need for an external power source in order for reduction in the concentration of oil in the expelled gas to be provided. A cyclonic oil separator is particularly effective when used in a gaseous fuel engine, due to a higher ventilation gas flow rate when compared to e.g. a diesel engine.

The cyclonic oil separator may comprise a chamber having a truncated cone portion. The inlet portion may comprise an inlet conduit leading to the chamber in a substantially tangential direction. The monitoring system may comprise a first pressure take-off point in fluid flow communication with the inlet conduit.

The outlet portion may comprise a tube extending within the chamber extending to an outlet conduit external to the chamber. The monitoring system may comprise a second pressure take-off point in fluid flow communication with the outlet conduit.

The first and second pressure take-off points may be located adjacent each other.

Advantageously, locating the first and second pressure take-off points adjacent each other may help to simplify connection of the pressure take-offs to one or more pressure sensors.

The monitoring system may comprise at least one pressure transducer in fluid flow communication with the first and second pressure take-off points.

The gas pressure source may be a pump.

Advantageously, the pump may enable the flowrate of the expelled gas to be more accurately controlled.

The pump may be downstream of the crankcase such that the pump induces a below-atmospheric pressure in the crankcase.

Advantageously, inducing a below-atmospheric pressure in the crankcase helps to inhibit the blow-by gas from flowing from the crankcase to other parts of the engine via routes separate to the ventilation path.

The oil separator may be arranged downstream of the pump.

Advantageously, such a configuration of the oil separator and pump may aid oil removed from the expelled gas by the oil separator to be transported to the crankcase.

The oil separator may be mounted to the pump.

Advantageously, mounting the oil separator to the pump may enable the oil separator and the pump to be pre-assembled, which may increase the speed of assembly of the engine as a whole.

The one or more outputs may comprise a control output. The monitoring system may be configured to control the pump output via the control output.

Advantageously, controlling the pump output based on the monitored parameter may enable closed-loop control of the flowrate of the expelled gas.

The pump may be a variable speed pump. The monitoring system may be configured to control a speed of the pump via the control output.

Advantageously, controlling the speed of the pump may help to ensure that the flowrate of the expelled gas is accurately controlled.

The one or more outputs may comprise an alert output. The monitoring system may provide the alert output when the difference between an actual value and a setpoint value exceeds a predetermined threshold, for example when the difference between the actual value of flowrate and the setpoint value of the flowrate is greater than a predetermined threshold, or the actual parameter indicative of flowrate and the setpoint parameter indicative of flowrate is greater than a predetermined threshold.

Advantageously, such a configuration of the monitoring system may help to prevent the concentration of gaseous fuel in the crankcase from rising above its lower flammability limit, for example due to an obstruction or blockage (e.g. due to ice formation) in the ventilation path.

The monitoring system may be configured to determine the setpoint parameter indicative of the flowrate threshold based on one or more determined operating parameters of the engine.

Advantageously, such a configuration of the monitoring system may enable the parameter indicative of the flowrate threshold to be based on an expected flowrate of the expelled gas according to the one or more determined operating parameters.

The one or more determined operating parameters may include one or more of an engine speed and an engine torque.

Advantageously, such operating parameters of the engine have been found to indicate the flowrate of blow-by gas (including the gaseous fuel) flowing into the crankcase.

The engine may be configured to shutdown when the monitoring system provides the alert output.

Advantageously, such a configuration of the engine may help to prevent the concentration of gaseous fuel in the crankcase from rising above its lower flammability limit.

The engine may comprise an engine structure comprising: a cylinder block, the crankcase, and optionally a gearcase. The pump may be positioned adjacent to the engine structure. The engine may comprise a passage extending from one of the crankcase and gearcase to the pump, such that the pump is in fluid flow communication with the crankcase.

Advantageously this arrangement minimises the space envelope required for the engine as a whole if fitted with a crankcase ventilation system.

The pump may be positioned adjacent a side of the engine structure.

Advantageously this arrangement further minimises the space envelope required for the engine as a whole if fitted with a crankcase ventilation (CCV) system. In particular, gaseous fuelled engines, such as hydrogen fuelled engines, typically do not require a fuel injection pump, since the gas is already supplied at greater than fuel injection pressure, so does not require a pump to pressurise it. This location often is where such pumps are fitted on liquid fuelled engines and therefore becomes available for other uses in gaseous fuelled engines.

The pump may be positioned to a side of the cylinder block, forward of the gearcase.

The pump may be mounted to the engine structure.

Advantageously this simplifies installation of CCV systems since the pump is supplied as a single unit with the engine.

The gearcase may extend transversely a greater distance than at least the cylinder block. The pump may be at least partially positioned within a space envelope defined by a virtual longitudinal projection forward of the gearcase.

This arrangement further minimises the overall space envelope required for the pump.

The pump may be fully mounted within the envelope.

The engine may further comprise one or more ancillary components mounted to the engine structure, such as one or more of a lubrication oil filler, a lubrication oil cooler, an inlet manifold, and/or an electronic control unit. The pump may project transversely less than or equal to the maximum width of the one or more of the ancillary components.

This arrangement may result in the engine not requiring a different installation envelope compared to an equivalent engine that is liquid fuelled, e.g. by diesel.

The pump may occupy a space envelope less than or equal to 200mm in a longitudinal direction (x) and/or 240mm in a vertical direction (z) and/or 175mm in a transverse direction (y).

The passage may comprise an oil pre-separator upstream of the pump.

The oil pre-separator may be mounted adjacent to the engine structure (e.g. the gearcase).

Advantageously, such a mounting arrangement of the oil pre-separator may help to improve the packaging of the engine.

The passage may extend between the pump and an aperture in the gearcase.

Advantageously the outlet passage in this configuration can be short, reducing material usage and cost.

The aperture may be in a forward-facing wall of the gearcase.

In liquid fuelled engines, an aperture is typically provided in this location for taking a drive from the gearcase to a fuel injection pump, so it is possible to re-purpose the aperture without a needing to reconfigure the engine.

The aperture may be above a cam gear mounted to engine camshaft.

This location may minimise the amount of lubrication oil splashed towards the aperture and therefore the amount carried into the pump and potentially expelled with the expelled gas.

The passage may terminate in an oil pre-separator located within the gearcase.

This further minimises the oil flowing into the pump and potentially expelled with the expelled gas.

The pre-separator may comprise a withdrawal conduit defining a mouth for the withdrawal of gases from the gearcase. The pre-separator may comprise a plate spaced axially from and overlying an opening of the withdrawal conduit.

This pre-separator arrangement has found to be effective at removing oil from the expelled gas.

The plate may comprise an angled portion arranged to extend from the axially spaced position and terminate at an edge at least axially aligned with or axially overlapping the mouth and the edge being transversely spaced therefrom.

This pre-separator arrangement has found to be effective at removing oil from the expelled gas.

The plate may comprise a planar portion overlying the mouth. The angled portion may extend around a perimeter of the planar portion.

The mouth may terminate in an out-turned lip.

This separator arrangement has found to be effective at removing oil from the expelled gas.

The pre-separator may comprise a flow diverter extending around at least a portion of the withdrawal conduit to divert oil running down the wall of the gearcase away from the opening of the withdrawal conduit.

The ratio between the diameter or minimum width of the plate and the diameter of the withdrawal conduit may be between around 4:1 to 2.5:1, e.g. around 3:1. For example the diameter of the plate may be around 66mm and the diameter of the withdrawal conduit around 22mm. The angled portion of the plate may terminate around 5-6mm axially away from the adjacent wall - e.g. a wall of the flow diverter. The out-turned lip may have a greater spacing from the corresponding wall e.g. at least 8mm. The lip may extend around at least 6mm, e.g. 9mm beyond the inside diameter of the withdrawal conduit to define a lip of at least 2mm, e.g. 4mm.

The pump inlet may face transversely outwards.

This has been found to provide a compact configuration for the pump.

The pump may comprise an impeller. The impeller may be rotatable about an impeller rotation axis.

The impeller rotation axis may be arranged substantially longitudinally of the engine.

This has been found to provide a compact configuration for the pump.

The impeller rotation axis may be substantially vertical in a normal operating orientation of the engine.

Advantageously this orientation of impeller may assist in the drainage of oil from the pump.

The impeller rotation axis may be substantially parallel to an axis one or more cylinders of the engine.

The pump may be a side channel pump.

The pump may comprise first and second inlets with corresponding first and second vortex generators immediately upstream of the first and second inlets.

Advantageously, the use of vortex generators immediately upstream of the pump inlets has been found to make pump operation more efficient.

The pump may comprise a substantially right angle diversion of flow in the conduit immediately upstream of the inlets.

The vortex generators may be located at an end of the passage.

The engine may further comprise an oil separator in fluid flow communication with and downstream of the pump.

Providing an oil separator enables oil consumption of the engine to be reduced, with environmental and cost benefits.

The oil separator may be located longitudinally between the forward facing wall of the gearcase and the pump.

This positioning provides a compact arrangement of oil separator and pump, and minimises the length and complexity of interconnecting pipe-runs.

The longitudinal dimension of the space envelope occupied by the pump and the oil separator may be less or equal to 200mm.

The oil separator may comprise a gas outlet. A conduit may extend from the gas outlet into a separate chamber in the gearcase.

Using a portion of the gearcase as an outlet further minimises pipe runs, and can mean that heat generated in the engine can minimise the risk of liquid freezing and restricting gas flow. The positioning of the oil separator results in it being close to the gearcase to easily take advantage of this chamber.

The oil separator may further comprise an oil outlet. A conduit may extend from the oil outlet back to the crankcase or gearcase.

Advantageously, this positioning places the oil-separator close to the crankcase and gearcase, to enable a short pipe-run from the oil outlet.

The pump may be a self-contained unit with drive motor, e.g. electric drive motor.

This arrangement further minimises the required space envelope.

The gaseous fuel may be hydrogen.

The inherent characteristics of hydrogen as a fuel tend to result in a greater risk of its lower flammability limit being exceeded, and a consequent high ventilation demand to avoid this happening. As such the present ventilation arrangement enables this to be implemented in a space efficient manner, whilst ensuring safety.

The engine may be a hydrogen-fuelled internal combustion engine. The ventilation system may comprise a cyclonic oil separator arranged to receive expelled gas comprising the blow-by gas. The cyclonic oil separator may be configured such that the flow of expelled gas therethrough forms a vortex by which oil carried by the expelled gas is separated from the expelled gas.

Advantageously, use of a cyclonic oil separator and as the oil separator to be a passive component, thus reduces complexity of the system and avoiding the need for an external power source in order for reduction in the concentration of oil in the expelled gas to be provided. A cyclonic oil separator is particularly effective when used in a gaseous fuel engine, due to an inherent higher gas flow rate when compared to e.g. a diesel engine to maintain uncombusted fuel below its lower flammability limit.

The cyclonic oil separator may comprise a chamber having a truncated cone portion. The truncated cone portion may define a truncated cone portion longitudinal axis. The truncated cone portion may comprise an apex, and a roof distal the apex. The roof may define a roof plane. The cyclonic oil separator may comprise a separator inlet by which expelled gas is introduced into the chamber, the inlet defining an inlet longitudinal axis. The inlet longitudinal axis may be oriented at a non-zero angle to the roof plane. The inlet longitudinal axis may be oriented towards the apex, such that expelled gas flow through the inlet is directed towards the apex.

Orientation of the inlet of the cyclonic oil separator towards the apex of the separator has been found to advantageously improve the flow of expelled gas through the separator.

The inlet longitudinal axis may be oriented at an angle of between 1° and 45° to said roof plane.

The inlet longitudinal axis may be oriented at an angle of between 10° and 35° to said roof plane.

It has been found that the inlet being oriented at an angle within these ranges advantageously leads to improvement of the vortex, and so to improved separation of oil from the expelled gas.

The separator may comprise an expelled gas outlet by which expelled gas exits the chamber, downstream of the vortex.

The ventilation system may comprise a take-off point for a pressure transducer at the inlet, and a take-off point for a pressure transducer at the outlet.

Providing take-off points for pressure transducers at the inlet and the outlet allows monitoring of the pressure differential between the inlet and the outlet of the cyclonic oil separator.

The inlet pressure transducer take-off point, and the outlet pressure transducer take-off point may be at a first end of the separator.

The inlet and outlet pressure transducer take-off points being located together at the first end of the separator allows a more compact arrangement, and more easily allows a single pressure transducer to be used if so desired.

The inlet pressure transducer take-off point, and the outlet pressure transducer take-off point may each define a transducer take-off longitudinal axis. The transducer take-off longitudinal axes may be substantially parallel to one another.

The inlet and outlet pressure transducer take-off points being parallel to one another also advantageously leads to a compact arrangement.

The inlet pressure transducer take-off and the outlet pressure transducer take-off may be adjacent one another.

The inlet and outlet pressure transducer take-off points being adjacent one another again advantageously allows a compact arrangement. This is of particular importance in this type of system, where the space envelope available is limited.

The ventilation system may comprise one or more pressure transducers for determining a difference between a pressure of the expelled gas at the inlet and the pressure of the expelled gas at the gas outlet.

The or each transducer may be mounted to the separator.

Mounting the or each transducer to the separator advantageously provides a compact arrangement, and can reduce the number of parts required.

The or each transducer may be mounted to a component remote from the separator.

The or each transducer can thus advantageously be mounted to a component less exposed to vibrations.

The chamber may comprise a cylindrical portion contiguous with the truncated cone portion and defining a cylindrical portion longitudinal axis. The cylindrical portion may be distal the apex. The gas outlet may comprise a tube extending within the chamber.

The tube may define a tube longitudinal axis. The tube longitudinal axis may be at an angle of 10° or less to the cylindrical portion longitudinal axis.

The tube longitudinal axis may be at an angle of 5° or less to the cylindrical portion longitudinal axis.

The tube longitudinal axis may be substantially parallel to the cylindrical portion longitudinal axis.

The tube longitudinal axis may be co-axial with the cylindrical portion longitudinal axis.

The tube may be a substantially cylindrical tube.

The tube outer diameter may be in the range of 17mm to 45mm.

The tube being of this shape and dimensions improves the flow of expelled gas through the chamber, and aids the departure of the expelled gas from the chamber. In particular, the corresponding shape of the outside of the tube and the inside of the cylindrical portion of the chamber improves the vortex.

The tube may extend within the chamber between a quarter and a third of the length of the cylindrical portion.

The tube may extend within the chamber between a quarter and a third of the length of the chamber.

Advantageously, this relative length of the tube aids the departure of the expelled gas from the cyclonic oil separator.

The gas outlet may comprise an outlet aperture defined by the chamber. The outlet aperture may be located at an upper end of the chamber, distal the apex.

This location of the outlet aperture advantageously aids the departure of the expelled gas from the chamber.

The oil separator truncated cone portion may have a maximum internal diameter in the range of 30mm to 80mm.

The truncated cone portion may have a height in the range of 50mm to 200mm.

The cyclonic oil separator has been found to be effective whilst being relatively compact, as demonstrated by the above dimensions. The cyclonic oil separator can therefore advantageously be fitted in a compact space envelope, whilst providing effective useful separation of oil from the expelled gas.

The truncated cone portion may be a right circular truncated cone portion.

The truncated cone portion may be an oblique circular truncated cone portion.

Either conical shape has been found to provide an effective vortex. The shape of the truncated cone portion can be adapted to suit the available space envelope.

The chamber may comprise a cylindrical portion contiguous with the truncated cone portion and defining a cylindrical portion longitudinal axis. The truncated cone portion may be defined by a wall. The angle of the wall to the cylindrical portion longitudinal axis may be in the range of 0° to 30°.

The maximum angle of the wall to the cylindrical portion longitudinal axis may be in the range of 15° to 30°. The minimum angle of the wall to the cylindrical portion longitudinal axis may be in the range of 0° to 25°.

The truncated cone portion longitudinal axis may be at an angle of 0° to 30° to the cylindrical portion longitudinal axis.

Such dimensions have been found to provide an effective separator, whilst allowing a separator to fit into the required relatively small space envelope.

The oil separator may comprise an oil outlet. The oil outlet may be located at the apex.

The oil outlet may define an oil outlet longitudinal axis. The oil outlet longitudinal axis may be at an angle of 0° to 45° to the truncated cone portion longitudinal axis.

Such a location and angle of the oil outlet allows the oil to leave the separator through gravity and so returned to the crankcase for re-use. The angle of the oil outlet to the angle of the truncated cone portion allows the separator to fit into a required space envelope whilst remaining effective.

The ventilation system may comprise a controller arranged to control a variable output pump to control the flowrate of the expelled gas.

Controlling the flow rate of the expelled gas allows the control of the concentration of the gaseous fuel to be below the lower flammability limit of the expelled gas across the operational envelope of the engine.

The controller may be configured to control an output of the pump based on an operating parameter of the engine.

The controller may be configured to control an output of the pump based on load/output torque and/or engine speed.

Advantageously, it has been found that engine speed and engine torque both provide a good indication of the flow rate of blow by gas flowing into the crankcase.

The controller may be configured to control the pump such that the maximum flowrate of expelled gas is at an engine speed of 1000rpm to 2500rpm.

The controller may be configured to control the pump such that the maximum flowrate of expelled gas is at an engine speed of 1100rpm to 1400rpm.

The controller may be configured to control the pump such that the maximum flowrate of expelled gas is at an engine speed of 1150rpm to 1200rpm.

For engines of the type described herein, the maximum output torque of the engine is commonly at an engine speed in this range.

At a flowrate of the expelled gas through the oil separator of at least 30l/min per litre of engine displacement, a reduction in oil concentration of a factor of at least 10 may be achieved.

At a flowrate of the expelled gas through the oil separator of at least 60l/min per litre of engine displacement, a reduction in oil concentration of a factor of at least 10 may be achieved.

At a flowrate of the expelled gas through the oil separator of at least 30l/min per litre of engine displacement, a reduction in oil concentration of a factor of at least 20 may be achieved.

At a flowrate of the expelled gas through the oil separator of at least 60l/min per litre of engine displacement, a reduction in oil concentration of a factor of at least 20 may be achieved.

Such flowrates per litre of engine displacement are typical for an engine of the type described herein.

The engine displacement may be in the range of 0.75l to 1.5 litres per cylinder.

Such engine displacement per cylinder is typical of the type of engine described herein for off-highway/working machine applications.

The oil separator may comprise a first moulded portion and a second moulded portion.

Advantageously, the oil separator can be moulded to the required shape and size and easily assembled.

The separator may be of plastics material.

Plastics material is easily moulded into the required shape.

The separator may be of composite material of plastics material and an electrically conductive material.

Advantageously, such a composite material allows insulation of the components whilst still providing conductivity, in order to avoid an electrostatic differential between components connected to the oil separator.

The engine may be a hydrogen-fuelled internal combustion engine. The engine may comprise an engine structure comprising at least a cylinder head, a cylinder block and the crankcase. The ventilation system may comprise at least one ancillary component mounted directly or indirectly to the engine structure. The at least one ancillary component may be formed of a composite material. The composite material may be of plastics material and an electrically conductive material, such that the composite material is configured for the dissipation of electric charge.

Advantageously, such a composite material allows insulation of the components whilst still providing conductivity, in order to avoid an electrostatic differential between components connected to the oil separator. The likelihood of a spark being produced by the electro-static discharge is thus reduced.

The at least one ancillary component may comprise an oil pre-separator, an oil separator, a manifold, a conduit and/or a pump housing.

Making one or more these components of the composite material improves conductivity, whilst providing insulation so reduces the likelihood of a spark being produced.

The composite material may be of conductive material embedded within plastics material.

Such a material can be moulded to provide the required components. Such material is inherently conductive to the extent required, whilst providing insulation. Advantageously, no further step is required in order to provide conductivity.

The composite material may comprise between 20% and 40% conductive material.

The composite material may comprise between 25% and 35% conductive material.

The composite material may comprise substantially 30% conductive material.

Such a range of percentage of conductive material has been found to provide the required conductivity, whilst also providing insulation.

The conductive material may be formed of strands, e.g. wherein the conductive material is of filamentary or wire portions.

Conductive material such as carbon fibre can be embedded into plastics material in such strand form to provide a composite.

The conductive material may be in the form of powder.

For conductive material such as e.g. graphite, the powder form can advantageously be used to embed the conductive material within the plastics material.

The plastics material may be at least partially coated with conductive material.

The plastics material may be at least partially coated with conductive material at an internal surface thereof.

At least partially coating the plastics material provides an alternative means of providing conductivity as well as insulation.

The conductive material may be carbon fibre.

The conductive material may be graphite.

The conductive material may be a metallic conductive material.

A range of conductive materials can be embedded within or used to coat a plastics material to provide a composite.

The ventilation system may have electrical continuity throughout the ventilation system.

Advantageously, the likelihood of a spark being produced due to electro-static discharge is reduced.

The internal combustion engine may comprise an electrical conductivity monitoring system configured to monitor electrical conductivity of the ventilation system.

The electrical conductivity monitoring system may comprise at least one sensor.

Providing an electrical conductivity monitoring system advantageously allows electrical conductivity throughout the system to be monitored, so that a warning can be provided should electro-static charge build up at some point in the system and the likelihood of a spark being produced is increased.

According to a second aspect of the present teachings, there is provided a crankcase ventilation system for an internal combustion engine comprising a crankcase, the system optionally comprising: an inlet for supply of ventilation gas for diluting blow-by gas passing from one or more combustion chambers of the engine into the crankcase; and/or an electrically driven pump to move gas through the system to an outlet; and/or a pump control system to adjust a gas flowrate through the system to maintain the concentration of combustible blow-by gas below a lower flammability limit, in dependence on an engine blow-by gas generation level; and/or an oil separator to remove oil from the blow-by gas upstream of the outlet; and/or a differential pressure measurement device for use in pump control and/or, system diagnostics and/or system function monitoring.

The pump may be located in the system downstream of the crankcase so as to generate a negative pressure in the crankcase relative to atmospheric pressure.

The pump may be located in the system upstream of the crankcase so as to generate a positive pressure in the crankcase relative to atmospheric pressure.

The outlet may be in fluid flow communication with an air inlet to the one or more combustion chambers of the engine such that the expelled gas comprising ventilation gas and blow-by gas are introduced into the air inlet.

The outlet may release the expelled gas comprising ventilation gas and blow-by gas to atmosphere.

The pump control system may comprise a controller configured to derive the blow-by gas generation level from one or more determined operating parameters of the engine.

The one or more determined operating parameters may include one or more of an engine speed, and an engine torque.

The controller may be configured to determine a setpoint pump output based on the one or more determined operating parameters, and control the output of the pump to correspond substantially to the setpoint pump speed.

The controller may be configured to control the pump output based on a setpoint flowrate of expelled gas downstream of the crankcase or ventilation gas upstream of the crankcase or based upon a setpoint parameter indicative of flowrate of expelled gas downstream of the crankcase or ventilation gas upstream of the crankcase.

The pressure differential measurement device may be arranged to measure the pressure differential across the oil separator.

The pump may be a side channel pump.

The side channel pump may have first and second inlets and first and second vortex generators may be provided immediately upstream of the respective first and second inlets.

The crankcase ventilation system may further comprise a ventilation path including an inflow portion extending between the inlet and the crankcase. The inflow portion may run from the inlet to the crankcase via the cylinder head.

The inflow portion may comprise one or more airflow passages in the cylinder head and/or crankcase for transporting ventilation air from the cylinder head to the crankcase.

The inflow portion may comprise a plurality of the airflow passages distributed across the crankcase.

The crankcase ventilation system may further comprise a rocker cover mounted to the cylinder head. The ventilation path may pass through the rocker cover to the cylinder head.

The outlet may comprise an outflow portion of the ventilation path and a section of the outflow portion may be arranged in one or more of a gearcase, a cylinder block, a cylinder head and a rocker cover of the engine.

The outflow portion may terminate above one or more cylinders of the engine.

The oil separator may be a cyclonic oil separator.

The oil separator may comprise a chamber having a truncated cone portion. The truncated cone portion may define a truncated cone portion longitudinal axis. The truncated cone portion may comprise an apex, and a roof distal the apex. The roof may define a roof plane. The oil separator may comprise a separator inlet by which expelled gas is introduced into the chamber. The inlet may define an inlet longitudinal axis. The inlet longitudinal axis may be oriented at a non-zero angle to the roof plane. The inlet longitudinal axis may be oriented towards the apex, such that expelled gas flow through the inlet is directed towards the apex.

The crankcase ventilation system may further comprise an oil pre-separator upstream of the oil separator.

The oil pre-separator may be mounted to a wall of the crankcase.

The engine may further comprise a gearcase and the oil pre-separator may be mounted to a wall of the gearcase.

The oil pre-separator may comprise a mouth for the withdrawal of gases from the crankcase or gearcase through the wall thereof. The oil pre-separator may comprise a plate spaced axially from and overlying the mouth.

The pump may be positioned upstream of the oil separator and downstream of the oil pre-separator.

The crankcase ventilation system may further comprise an engine structure. The engine structure may comprise at least the crankcase, a cylinder block and a gearcase. The pump may be positioned adjacent to the engine structure. An outlet passage may comprise a conduit extending from one of the crankcase and gearcase to the pump.

The pump may be positioned adjacent a side of the engine structure, for example to a side of the cylinder block, forward of the gearcase.

The gearcase may extend transversely a greater distance than at least the cylinder block. The pump may be at least partially positioned within a space envelope defined by a virtual longitudinal projection forward of the gearcase.

The pump may be fully mounted within the envelope.

The pump may occupy a space envelope less than or equal to 200mm in a longitudinal direction (x) and/or 240mm in a vertical direction (z) and/or 175mm in a transverse direction (y).

The crankcase ventilation system may comprise at least one component formed of a composite material. The composite material may be of plastics material and an electrically conductive material, such that the composite material is configured for the dissipation of electric charge.

According to a third aspect of the present teachings, there is provided a hydrogen fuelled internal combustion engine comprising a crankcase ventilation system according to the second aspect.

According to a fourth aspect of the present teachings, there is provided a method of controlling a flowrate of expelled gas transported from a crankcase of a gaseous fuel internal combustion engine, the expelled gas including the gaseous fuel, the engine comprising a pump arranged to transport the expelled gas from the crankcase to an outlet, the method comprising the steps of:
determining one or more operating parameters of the engine; and optionally
controlling the pump output based on the one or more determined operating parameters.

The method may further comprise the steps of:
determining an actual parameter indicative of a flowrate of the expelled gas downstream of the crankcase or ventilation gas upstream of the crankcase;
determining a setpoint parameter indicative of flowrate of expelled gas downstream of the crankcase or ventilation gas upstream of the crankcase based on the one or more determined operating parameters; and
controlling the pump output such that the actual parameter indicative of flowrate corresponds substantially to the setpoint parameter indicative of flowrate.

According to a fifth aspect of the present teachings, there is provided a pump assembly comprising:
a side channel pump including:
a housing including a first inlet, a second inlet, and an outlet; and
an impeller rotatable within the housing about a rotation axis so as to move fluid at the inlets to the outlet;
wherein the first and second inlets are arranged either side of a rotation plane of the impeller,
wherein the pump assembly further comprises a vortex generator in fluid communication with the inlets. The vortex generator may be configured to generate at least a first and optionally a second counter vortex in fluid moving into the first and second inlets respectively. If there are two vortices-these may be counter rotating vortices.

Advantageously, generating counter-rotating vortices in fluid moving into the first and second inlets of the pump may help to increase the efficiency of the pump, since the work required by the pump to induce counter-rotating vortices in the fluid moving from the inlets to the outlet may be reduced.

The vortex generator may comprise first and second vortex chambers configured to generate the first and second vortices respectively. The vortex generator may comprise an inlet in fluid communication with the vortex chambers. The vortex generator may be configured such that fluid travels from the inlet to the first and second inlets of the pump via the first and second vortex chambers respectively.

Advantageously, such a configuration of the vortex generator enables the first and second vortices to be generated from a single stream of fluid received at the inlet.

The vortex generator may be configured such that the first and second vortex chambers receive a circumferential inlet flow from the inlet.

Advantageously, such a configuration of the vortex generator may enable the vortex chambers to generate the first and second vortices without requiring any moving parts.

The vortex generator may comprise first and second outlets fluidly connecting the respective first and second vortex chambers to the respective first and second inlets of the pump. The vortex generator may be configured such that the first and second vortices travel through the first and second outlets respectively.

Advantageously, the first and second outlets may enable the first and second vortices to be separated before entering the respective inlet of the pump.

The outlets may be substantially orthogonal to a direction of the circumferential inlet flow.

Advantageously, such a configuration of the outlets may help to maximise the strength of the first and second vortices flowing into the respective inlet of the pump.

Each of the first and second vortex chambers may be substantially bowl-shaped.

Advantageously, such a configuration of the vortex chambers may help to maximise the strength of the first and second vortices generated therein.

The vortex generator may comprise a wall common to the first and second vortex chambers shaped to split fluid flowing from the inlet towards the wall into two counter-rotating vortices corresponding to the first and second vortices.

Advantageously, such a configuration of the vortex generator may enable the vortex chambers to generate the first and second vortices without requiring any moving parts.

The wall may comprise two arcuate portions joined via a ridge-shaped portion. An apex of the ridge-shaped portion may divide the first and second vortex chambers.

The first and second inlets may be adjacent each other.

Advantageously, such a configuration of the pump may help to minimise the size of the vortex generator.

The vortex generator may be mounted to the housing of the pump.

Advantageously, mounting the vortex generator to the pump enables the pump assembly to be preassembled.

The impeller may be rotated via an electric motor.

Advantageously, rotating the impeller via an electric motor may help to accurately control the speed of the impeller.

According to a sixth aspect of the present teachings, there is provided a working machine comprising the engine according to the first aspect.

The working machine may be configured to generate a visual and/or audible warning to an operator of the working machine when the monitoring system provides the alert output.

Advantageously, such a configuration of the engine may help to prevent the concentration of gaseous fuel in the crankcase from rising above its lower flammability limit.

According to a seventh aspect of the present teachings, there is provided a cyclonic oil separator configured to form a vortex in a gas travelling between an inlet portion and an outlet portion thereof to reduce a concentration of oil therein, the cyclonic oil separator inducing a pressure drop between the inlet portion and the outlet portion. The inlet portion may comprise a pressure take-off for a pressure transducer and the outlet portion may comprise a pressure take-off for a pressure transducer such that a pressure differential may be determined.

According to an eighth aspect of the present teachings, there is provided an internal combustion engine operable in a selected one of a first configuration according to the first aspect as a gaseous fuel, e.g. hydrogen powered engine, and a second configuration as a liquid fuel, e.g. diesel or gasoline powered engine. In the second configuration in place of the pump to exhaust expelled gas comprising ventilation gas and blow-by gas from the crankcase, a fuel injection pump is mounted adjacent to the engine structure in the space otherwise occupied by the pump to transport expelled gas.

By providing an internal combustion engine that is configurable for use with gaseous and liquid fuels with space that is used for a fuel injection pump required for liquid fuels, but redundant for gaseous fuels instead being used for a crankcase ventilation pump, parts inventory may be minimised, both engines may potentially be built on the same production line, and/or require the same installation space on a working machine, thereby saving cost.

An aperture may be provided in a wall of the gearcase for connection of a conduit to the pump to transport expelled gas in the first configuration and for a drive from the gearcase to the fuel injection pump in the second configuration.

The provision of an aperture in a single location that has utility in both configurations may further simplify the construction of the engine.

According to a ninth aspect of the present teachings, there is provided an oil pre-separator for mounting within an oil and gas containing chamber of an internal combustion engine. The pre-separator may comprise a withdrawal conduit defining a mouth for the withdrawal of gases from the chamber through a wall of the chamber; and may comprise a plate spaced axially from and overlying the mouth.

Use of a pre-separator minimises the oil flowing downstream and potentially being expelled with the expelled gas.

The plate may comprise an angled portion arranged to extend from the axially spaced position and terminate at edge at least axially aligned with or axially overlapping the mouth. The edge may be transversely spaced therefrom.

This arrangement has been found to be particularly effective at separating oil from the gas.

The plate may comprise a planar portion overlying the mouth. The angled portion may extend around a perimeter of the planar portion.

The mouth may terminate in an out-turned lip.

This further enhances the separation of oil from the expelled gas.

The pre-separator may comprise a flow diverter extending around at least a portion of the withdrawal conduit to divert oil running down the wall of the chamber away from the mouth of the withdrawal conduit.

This further enhances the separation of oil from the expelled gas.

The ratio between the diameter or minimum width of the plate and the diameter of the withdrawal conduit may be between around 4:1 to 2.5:1, e.g. around 3:1.

This arrangement has been found to be effective at separating oil from the expelled gas.

The angled portion of the plate may terminate around 5-6mm axially away from the adjacent wall - e.g. a wall of the flow diverter.

The out-turned lip may have a greater spacing from the corresponding wall than the angled portion, e.g. at least 8mm.

The out-turned lip may project transversely at least 2mm, e.g. around 4mm.

According to a tenth aspect of the present teachings, there is provided an oil pre-separator for mounting within an oil and gas containing chamber of a hydrogen powered internal combustion engine. The pre-separator comprises a withdrawal conduit defining a mouth for the withdrawal of expelled gas from the chamber and a baffle arrangement.

The pre-separator may be configured to reduce oil concentration in the expelled gas by a factor of at least 2.5, preferably at least 4 at a flowrate of at least 30l/min per litre of displacement of the internal combustion engine, e.g. at a flowrate of 30l/min - 80l/min.

According to an eleventh aspect of the present teachings, there is provided an oil separation system for mounting in an outflow path for expelled gas of a hydrogen internal combustion engine crankcase ventilation system. The oil separation system comprises an oil pre-separator according to the ninth aspect, and a cyclonic oil separator downstream of the pre-separator.

The pre-separator and the separator may reduce oil carry over in the expelled gas flow path downstream of the separator to less than or equal to 1g/hr, optionally less than or equal to 0.5g/hr of engine operation.

According to a twelfth aspect of the present teachings, there is provided a cyclonic oil separator for a crankcase ventilation system configured to expel blow-by gas contained within a crankcase therefrom, the separator being for receiving expelled gas comprising the blow-by gas, and the separator being configured such that the flow of expelled gas therethrough forms a vortex by which oil carried by the expelled gas is separated from the expelled gas. The oil separator may comprise a chamber having a truncated cone portion, wherein the truncated cone portion defines a truncated cone portion longitudinal axis. The truncated cone portion may have a maximum internal diameter in the range of 30mm to 80mm.

Advantageously, use of a cyclonic oil separator and as the oil separator to be a passive component, thus reducing complexity of the system and avoiding the need for an external power source in order for reduction in the concentration of oil in the expelled gas to be provided. A cyclonic oil separator is particularly effective when used in a gaseous fuel engine, due to a higher gas flow rate when compared to e.g. a diesel engine.

In exemplary embodiments, the truncated cone portion comprises an apex, and a roof distal the apex, wherein the roof defines a roof plane. The cyclonic oil separator comprises a separator inlet by which expelled gas is introduced into the chamber, the inlet defining an inlet longitudinal axis. The inlet longitudinal axis is oriented at a non-zero angle to the roof plane, and wherein the inlet longitudinal axis is oriented towards the apex, such that gas flow through the inlet is directed towards the apex.

Orientation of the inlet of the cyclonic oil separator towards the apex of the separator has been found to advantageously improve the flow of expelled gas through the separator.

In exemplary embodiments, the cyclonic oil separator of the inlet longitudinal axis is oriented at an angle of between 1° and 45° to said plane.

In exemplary embodiments the inlet longitudinal axis is oriented at an angle of between 10° and 35° to said plane.

It has been found that the inlet being oriented at an angle within these ranges advantageously leads to improvement of the vortex, and so to improved separation of oil from the expelled gas.

In exemplary embodiments, the cyclonic oil separator comprises a gas outlet by which expelled gas exits the chamber, downstream of the vortex.

In exemplary embodiments, the cyclonic oil separator of the chamber comprises a cylindrical portion contiguous with the truncated cone portion and defining a cylindrical portion longitudinal axis, wherein the cylindrical portion is distal the apex. The gas outlet comprises a tube extending within the chamber.

In exemplary embodiments, the tube defines a tube longitudinal axis, and the tube longitudinal axis is at an angle of 10° or less to the cylindrical portion longitudinal axis.

In exemplary embodiments, the tube longitudinal axis is at an angle of 5° or less to the cylindrical portion longitudinal axis.

In exemplary embodiments, the tube longitudinal axis is substantially parallel to the cylindrical portion longitudinal axis.

In exemplary embodiments, the tube longitudinal axis is co-axial with the cylindrical portion longitudinal axis.

In exemplary embodiments, the tube is a substantially cylindrical tube.

In exemplary embodiments the tube outer diameter is in the range of 17mm to 45mm.

The tube being of this shape and dimensions improves the flow of expelled gas through the chamber, and aids the departure of the expelled gas from the chamber. In particular, the corresponding shape of the outside of the tube and the inside of the cylindrical portion of the chamber improves the vortex.

In exemplary embodiments, the tube extends within the chamber between a quarter and a third of the length of the cylindrical portion.

In exemplary embodiments, the tube extends within the chamber between a quarter and a third of the length of the chamber.

Advantageously, this relative length of the tube aids the departure of the expelled gas from the cyclonic oil separator.

In exemplary embodiments, the cyclonic oil separator of the gas outlet comprises an outlet aperture defined by the chamber, and the outlet aperture is located at an upper end of the chamber, distal the apex.

This location of the outlet aperture advantageously aids the departure of the expelled gas from the chamber.

In exemplary embodiments, the cyclonic oil separator of any one of the separator truncated cone portion has a height in the range of 50mm to 200mm.

The cyclonic oil separator has been found to be effective whilst being relatively compact, as demonstrated by the above dimensions. The cyclonic oil separator can therefore advantageously be fitted in a compact space envelope, whilst providing effective useful separation of oil from the expelled gas.

In exemplary embodiments, the cyclonic oil separator of the truncated cone portion is a right circular truncated cone portion.

In exemplary embodiments, the truncated cone portion is an oblique circular truncated cone portion.

Either conical shape has been found to provide an effective vortex. The shape of the truncated cone portion can be adapted to suit the available space envelope.

In exemplary embodiments, the cyclonic oil separator of any one of the chamber comprises a cylindrical portion contiguous with the truncated cone portion and defining a cylindrical portion longitudinal axis, wherein the truncated cone portion is defined by a wall, and wherein the angle of the wall to the cylindrical portion longitudinal axis is in the range of 0° to 30°.

In exemplary embodiments, the maximum angle of the wall to the cylindrical portion longitudinal axis is in the range of 15° to 30°, and the minimum angle of the wall to the cylindrical portion longitudinal axis is in the range of 0° to 25°.

In exemplary embodiments, the truncated cone portion longitudinal axis is at an angle of 0° to 30° to the cylindrical portion longitudinal axis.

Such dimensions have been found to provide an effective separator, whilst allowing a separator to fit into the required relatively small space envelope.

In exemplary embodiments, the cyclonic oil separator comprises an oil outlet, and the oil outlet is located at the apex.

In exemplary embodiments, the oil outlet defines an oil outlet longitudinal axis, and the oil outlet longitudinal axis is at an angle of 0° to 45° to the truncated cone portion longitudinal axis.

Such a location and angle of the oil outlet allows the oil to leave the separator through gravity and so returned to the sump for re-use. The angle of the oil outlet to the angle of the truncated cone portion allows the separator to fit into a required space envelope whilst remaining effective.

In exemplary embodiments, the cyclonic oil separator of the separator comprises a first moulded portion and a second moulded portion.

Advantageously, the oil separator can be moulded to the required shape and size and easily assembled.

In exemplary embodiments, the separator is of plastics material.

Plastics material is easily moulded into the required shape.

In exemplary embodiments, the separator is of composite material of plastics material and an electrically conductive material.

Advantageously, such a composite material allows insulation of the components whilst still providing conductivity, in order to avoid an electrostatic differential between components connected to the oil separator.

In exemplary embodiments, at a flowrate of the expelled gas through the oil separator of at least 30l/min per litre of engine displacement, a reduction in oil concentration of a factor of at least 10 is achieved.

In exemplary embodiments, at a flowrate of the expelled gas through the oil separator of at least 60l/min per litre of engine displacement, a reduction in oil concentration of a factor of at least 10 is achieved.

In exemplary embodiments, at a flowrate of the expelled gas through the oil separator of at least 30l/min per litre of engine displacement, a reduction in oil concentration of a factor of at least 20 is achieved.

In exemplary embodiments, at a flowrate of the expelled gas through the oil separator of at least 60l/min per litre of engine displacement, a reduction in oil concentration of a factor of at least 20 is achieved.

The flowrate may be in a range of 30/min to 80l/min per litre of engine displacement at which a reduction in oil concentration of a factor of at least 10, optionally at least 20 is achieved.

Such flowrates per litre of engine displacement are typical for an engine of the type described herein.

At a flowrate of the expelled gas through the separator of at least 130l/min; optionally at a flowrate of 260l/min, a reduction in oil concentration of a factor of at least 10 may be achieved; optionally a factor of at least 20 may be achieved.

According to a thirteenth aspect of the present teachings, there is provided an electrical conductivity monitoring system configured to monitor electrical conductivity of the ventilation system of the internal combustion engine according to the first aspect.

According to a fourteenth aspect of the present teachings, there is provided a gaseous fuel internal combustion engine comprising the pump assembly according to the fifth aspect.

The engine may comprise at least two of the pump assemblies according to the fifth aspect.

The rotation axis of the impeller may be arranged to be substantially vertical in a normal operating orientation of the engine.

Advantageously this orientation of impeller may assist in the drainage of oil from the pump.

The rotation axis of the impeller may be substantially parallel to an axis one or more cylinders of the engine.

It will be appreciated that features of the first, second, third, fourth, fifth, sixth, seventh, eighth, ninth, tenth, eleventh, twelfth, thirteenth and/or fourteenth aspects may be combined with the features of the other aspects.

### BRIEF DESCRIPTION OF DRAWINGS

Embodiments are now disclosed by way of example only with reference to the drawings, in which:
Figure 1 shows an isometric view of an internal combustion engine according to an embodiment;
Figure 2 shows a simplified block diagram of an internal combustion engine crankcase ventilation system;
Figure 3 shows an isometric view of the internal combustion engine of Figure 1 including an intake system;
Figure 4 shows a cross-sectional view of the internal combustion engine through section W-W in Figure 1;
Figure 5 shows a cross-sectional view of the internal combustion engine through section X-X in Figure 1;
Figure 6 shows a cross-sectional view of the internal combustion engine through section Y-Y in Figure 1;
Figure 7 shows a cross-sectional view of the internal combustion engine through section Z-Z in Figure 1;
Figure 8 shows exemplary plots of setpoint flowrate with respect to engine speed for different engine loading conditions;
Figures 9A and 9B are flowcharts of control methods of the ventilation system;
Figure 10 shows an isometric view of a crankcase ventilation system pump assembly of the internal combustion engine of Figure 1;
Figure 11 shows an isometric view of a vortex generator of the pump assembly of Figure 10;
Figure 12 shows a cross-sectional view of the vortex generator shown in Figure 11;
Figure 13 shows an isometric view of an oil pre-separator of the internal combustion engine of Figure 1;
Figure 14 is a side view of the oil pre-separator of Figure 13;
Figure 15 is a cross-sectional view of the oil pre-separator of Figure 13;
Figure 16 is an internal view of a gearcase of the internal combustion engine of Figure 1;
Figure 17 is a detail view of the mounting of the pump assembly and oil pre-separator in the internal combustion engine of Figure 1;
Figure 18 is a side view of an oil separator of the internal combustion engine of Figure 1;
Figure 19 is a cross-sectional view of the oil separator of Figure 18;
Figure 20 is a further cross-sectional view of the oil separator of Figure 18 in the opposite direction to Figure 19;
Figure 21 is a plan view of the oil separator of Figure 18; and
Figure 22 is a side view of an exemplary working machine incorporating an internal combustion engine of Figure 1;
Figure 23 is a perspective view of an internal combustion engine according to another embodiment;
Figure 24 shows a block diagram of a crankcase ventilation system of the internal combustion engine of Figure 23, similar to that of Figure 2, but;
Figure 25 is a perspective view of a crankcase ventilation system pump assembly of the internal combustion engine of Figure 23; and
Figures 26 to 28 are vertical cross-sectional views through an oil separator of the crankcase ventilation system of Figure 24 on different planes.

### DETAILED DESCRIPTION OF EMBODIMENT(S)

In the following detailed description, numerous specific details are set forth in order to provide a thorough understanding of various embodiments and the inventive concept. However, those skilled in the art will understand that: the present teachings may be practiced without these specific details or with known equivalents of these specific details; that the present teachings is not limited to the described embodiments; and, that the present teachings may be practiced in a variety of alternative embodiments. It will also be appreciated that well known methods, procedures, components, and systems may not have been described in detail.

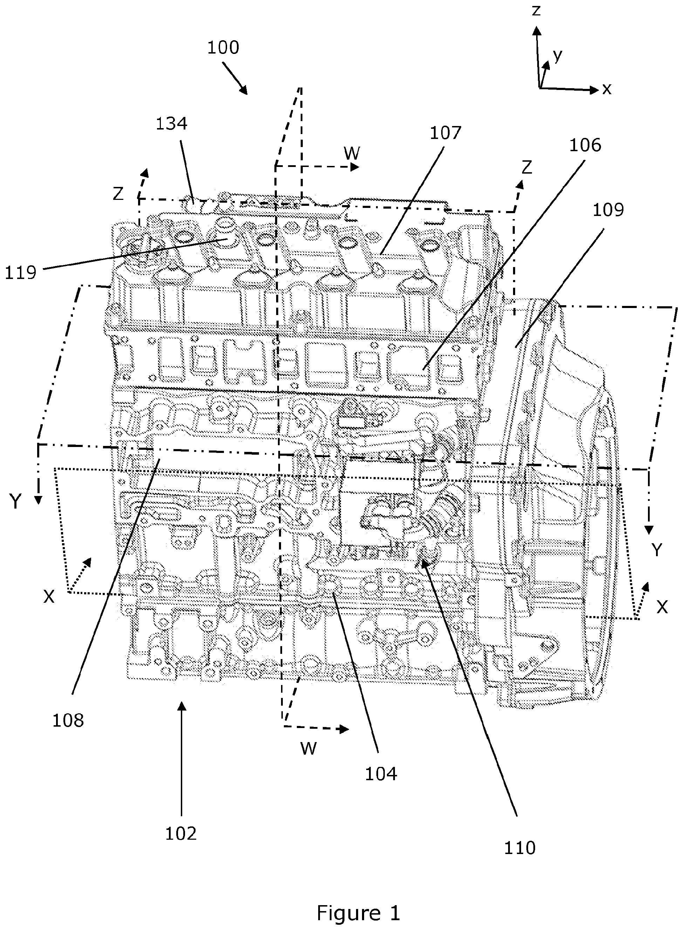

Figure 1 shows an internal combustion engine 100 according to an embodiment. The engine 100 is a gaseous fuel engine configured to be powered by a gaseous fuel, such as hydrogen, compressed natural gas (CNG), biogas or the like. In the illustrated embodiment, the engine 100 is powered by hydrogen.

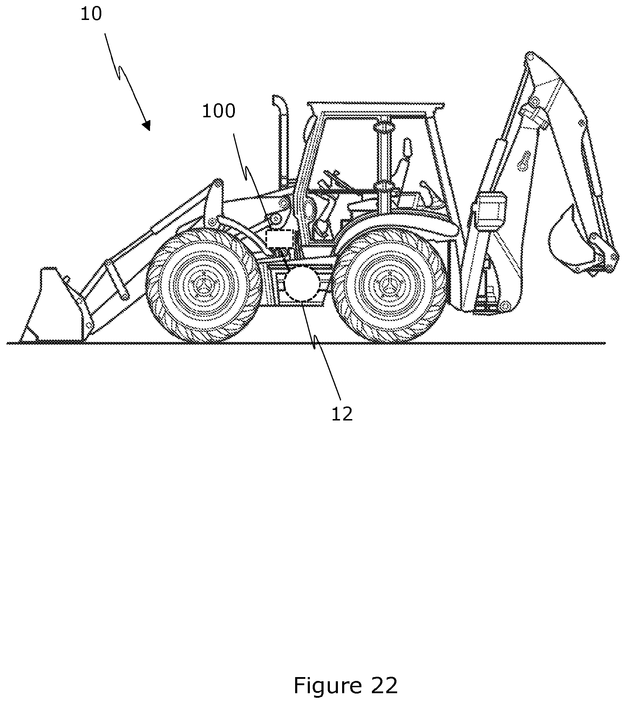

The engine 100 may be suitable for use as the prime mover in a working machine 10 (see Figure 22 which depicts a backhoe loader, but may also be a telescopic handler, a forklift truck, a wheeled loading shovel, a dumper, an excavator or a tractor, for example). Such working machines 10 are suitable for use in off-highway industries such as agriculture and construction. In these industries they are generally configured to perform tasks such as excavation, load handling, harvesting or planting crops. The engine 100 may also be utilised in a genset - a self-contained unit to provide electrical power at off-grid locations. As such the engine 100 is typically required to have certain characteristics such as a high torque output over a wide engine speed band, with peak torque occurring at a relatively low engine speed. which differ from light passenger vehicles, for example. In off-highway applications, this provides "torque backup" that enables working machines 10 to continue to carry out working operations when encountering increased loads, or resistance to a working operation - e.g. an excavator encountering a particularly solid piece of earth to be excavated.

The engine 100 includes an engine structure 102 including a crankcase 104, a cylinder head 106, a rocker cover 107, a cylinder block 108, and a gearcase 109.

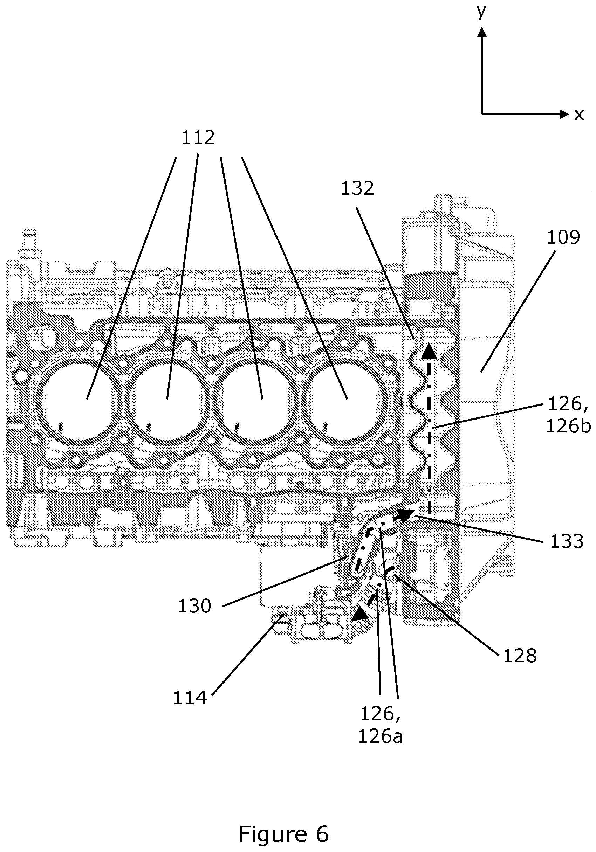

The cylinder block 108 includes one or more cylinders 112; four in the present embodiment (see Figure 6). The cylinder head 106 is mounted to the cylinder block 108 so as to be coupled to the one or more cylinders 112. The cylinder head 106 includes one or more inlet ports (not shown) for supplying air to each cylinder 112, and one or more exhaust ports (not shown) for exhausting combustion gases from each cylinder 112. In embodiments in which the engine 100 is a port fuel injection engine, the one or more inlet ports also supply fuel to each cylinder 112 from a pressurised fuel tank 12 (Figure 22). Each inlet port is selectively opened and closed by an inlet valve (not shown), and each exhaust port is selectively opened and closed by an exhaust valve (not shown). In other embodiments the gaseous fuel may be directly injected into each cylinder 112.

The engine 100 includes a valvetrain (not shown) including a camshaft (not shown) and rocker arms (not shown) arranged to open and close each inlet valve and each exhaust valve via rotation of the camshaft (not shown). The camshaft is mounted to the cylinder block 108. The rocker arms are mounted to the cylinder head 106. Motion of the camshaft is transferred to the rocker arms via pushrods (not shown) extending between the cylinder block 108 and the cylinder head 106. The rocker cover 107 is mounted to the cylinder head 106 and houses the rocker arms.

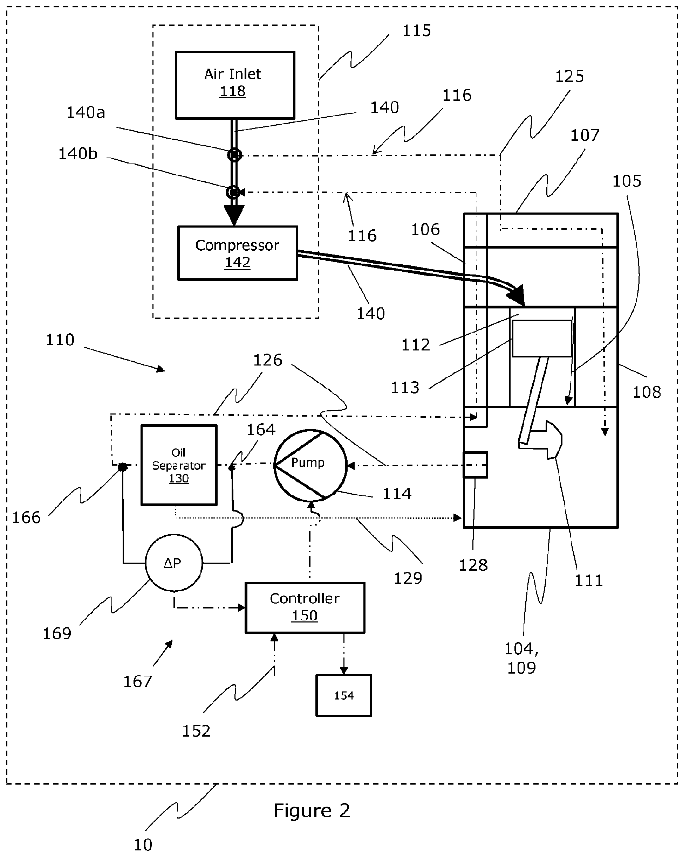

Each cylinder 112 receives a piston 113 (schematically shown in Figure 2) which is translationally movable within the cylinder 112. During operation of the engine 100, translational movement of each piston 113 is converted into rotational movement of a crankshaft (not shown). The crankcase 104 houses the crankshaft.

In the present embodiment the engine has a total displacement of 4.4 litres (i.e. 1.1 litres per cylinder. In engines used in off-highway applications each cylinder may typically have a displacement of between 0.75 and 1.5 litres. Such a displacement is relatively high by comparison with passenger vehicle engines, but is suited to providing the operating characteristics described above.

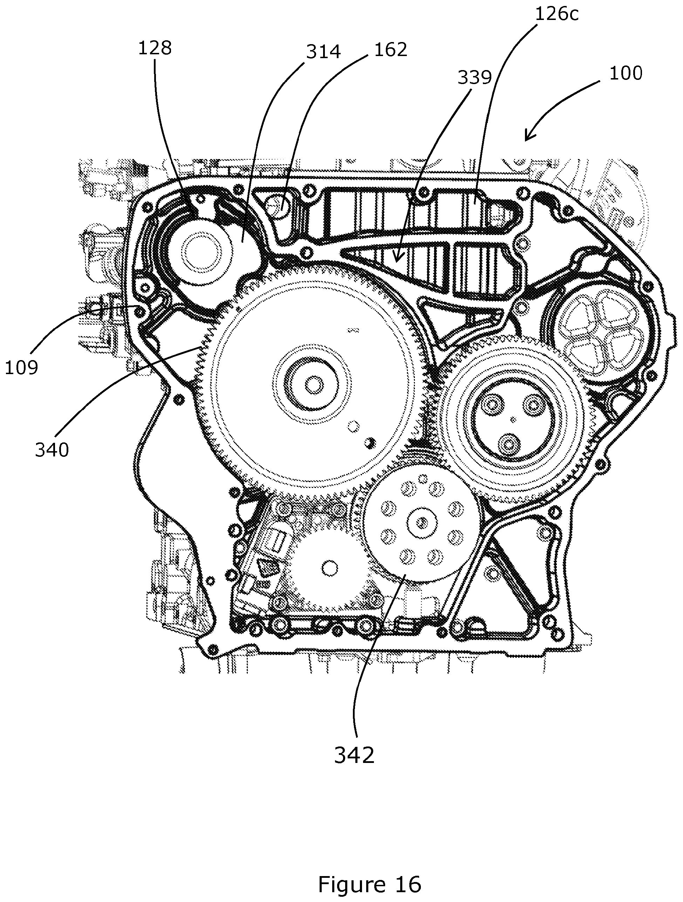

The gearcase 109 is mounted to one or both of the cylinder block 108 and the crankcase 104. The gearcase 109 projects laterally from said one or both of the cylinder block 108 and the crankcase 104. The gearcase 109 houses a gear assembly 339 (shown in Figure 16) configured to transmit rotary motion of the crankshaft to the camshaft for operation of the rocker arms. The gearcase 109 is in fluid communication with the crankcase 104 and can be considered an extension thereof for the purposes of this specification.

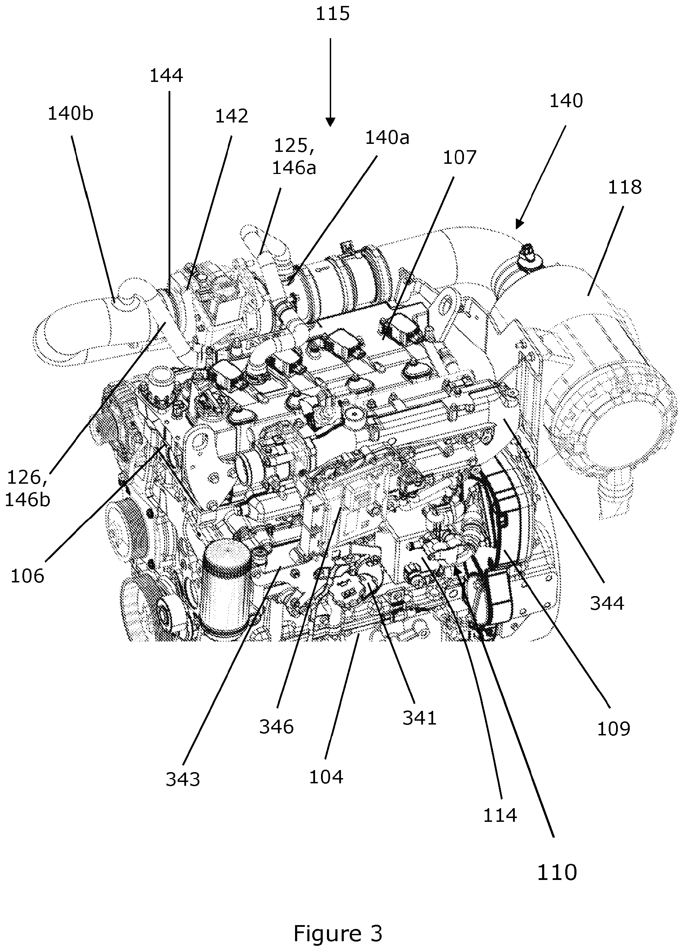

With further reference to Figures 2 and 3, the engine 100 includes an intake system 115 configured to supply air to the one or more cylinders 112 for combustion. In the illustrated embodiment, the intake system 115 is configured to supply air to the cylinder head 106 for delivery to the cylinders 112 via the respective inlet ports.

With further reference to Figure 3, the intake system 115 includes an intake passage 140 (represented by a solid double line in Figure 2) arranged to transport air from an air filter 118 upstream to the cylinders 112 downstream.

During operation of the engine 100, gaseous fuel and air introduced into each cylinder 112, as well as combustion gases formed within the cylinder 112, flow out of the combustion chamber past the piston 113 and into the crankcase 104 following the path indicated by arrow 105 as "blow-by" gas.

The engine 100 includes a ventilation system 110 configured to ventilate the blow-by gas from the crankcase 104.

Figure 2 shows a simplified diagram of the ventilation system 110 according to an embodiment. The ventilation system 110 comprises a ventilation path 116 (indicated by a dash-dot line in Figure 2) to transport ventilation gas (air in this embodiment) from a ventilation path inlet from the air intake system 115 to the crankcase 104 so as to dilute the concentration of blow-by gas in the crankcase 104. This portion of the ventilation path 116 is referred to as an inflow portion 125, being upstream of the crankcase 104. The wording "ventilation gas" is used to differentiate from air supplied to the one or more cylinders 112 for combustion.

The ventilation system 110 is configured to draw air as the ventilation gas into the ventilation path 116 from the intake passage 140 at a first location 140a (see Figures 2 and 3) which defines the ventilation path inlet.

The ventilation system 110 is further configured to transport the diluted blow-by gas from the crankcase 104 (hereinafter "expelled gas") via the ventilation path 116 to an outlet. This portion of the ventilation path 116 is referred to as the outflow portion 126, being downstream of the crankcase 104 and gearcase 109.

The ventilation system 110 is configured to exhaust the expelled gas from the crankcase 104 to a second location 140b of the intake passage 140 which defines a ventilation path outlet. The second location 140b is downstream of the first location 140a with respect to the intake passage 140.

The ventilation system 110 further includes a gas pressure source 114 within the ventilation path 116. The gas pressure source 114 is configured to transport ventilation gas along the inflow portion 125 of the ventilation path 116 from the first location 140a to the rocker cover 107, and then to the crankcase 104. The gas pressure source 114 is further configured to transport a combination of the ventilation gas and the blow-by gas 105, which includes the gaseous fuel, from the crankcase 104 and gearcase 109 and along the outflow portion 126 of the ventilation path 116 to the section location 140b as expelled gas.

It will be appreciated that the flowrate of expelled gas out of the crankcase 104 in the outflow portion 126 of the ventilation path 116 is substantially equal to the sum of the flowrate of blow-by gas entering the crankcase past the piston 113 as indicated by arrow 105 and the ventilation gas entering the into the crankcase 104 via the inflow portion 125.

Advantageously, transporting ventilation gas from the first location 140a to the crankcase 104 via the rocker cover 107 and cylinder head 106 helps to flush blow-by gas out of and away from the cylinder head 106. As such, exposure of components in the cylinder head 106 (e.g. the rocker arms) to the blow-by gas is reduced, which may reduce damage to said components caused by exposure to the blow-by gas containing hydrogen (e.g. via hydrogen embrittlement).

In the illustrated embodiment, the gas pressure source 114 is a pump 114 or blower. In alternative embodiments (not shown), any suitable gas pressure source may be used. For example, in some embodiments, the gas pressure source 114 may be provided by a compressor or turbine (e.g. a compressor or turbine stage of a turbocharger) in the intake system 115/exhaust system, which is in fluid communication with the ventilation system 110.

The pump 114 is configured to induce a below-atmospheric pressure in the crankcase 104 in the range of -100 to -10 mbar relative to atmospheric pressure; for example, -80 to -20 mbar relative to atmospheric pressure. In the illustrated embodiment, the pump 114 is arranged downstream of the crankcase 104 in the outflow portion 126 of the ventilation path 116.

In alternative embodiments (not shown), the pump 114 may be configured to induce any suitable below-atmospheric pressure in the crankcase 104. In other embodiments, pump 114 may be configured to induce an above-atmospheric pressure in the crankcase 104. For example, the pump 114 may be arranged upstream of the crankcase 104 in the inflow portion 125 of the ventilation path 116.

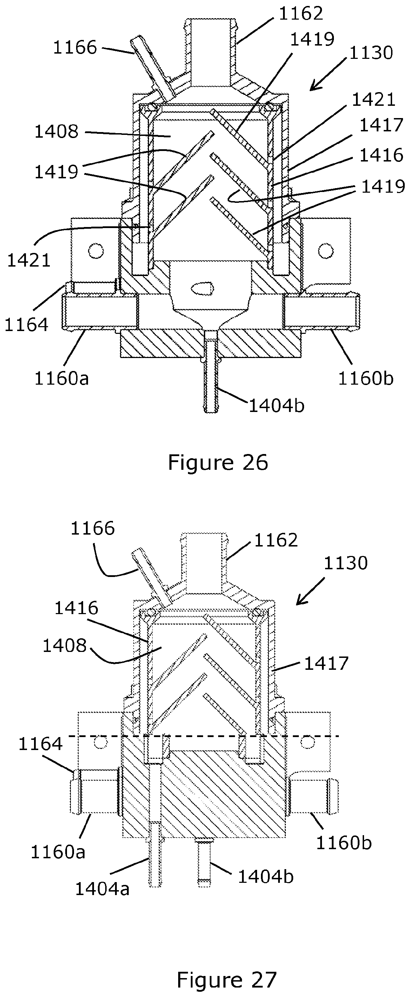

The ventilation system 110 includes an oil separator 130 configured to reduce a concentration of oil in the expelled gas transported from the crankcase 104. The oil separator 130 is a passive oil separator. A 'passive oil separator' is defined as an oil separator that requires no external power source to reduce a concentration of oil in the expelled gas flowing through the oil separator. In the illustrated embodiment, the oil separator 130 is a cyclonic oil separator, discussed more in the following. In alternative embodiments (not shown), the oil separator 130 may be any suitable active or passive oil separator. For example, the oil separator 130 may be a labyrinth oil separator similar to that described below in relation to Figures 26 and 27. The oil separator 130 is in the outflow portion 126.

The oil separator 130 is arranged downstream of the pump 114. In the illustrated embodiment, the oil separator 130 is mounted to the pump 114.

The engine 100 includes an oil passage 129 (represented by a dotted line in Figure 2) arranged to transport oil removed from the expelled gas by the oil separator 130 to the crankcase 104. The removed oil drains along the oil passage 129 to the crankcase 104 due to gravity. The pressure in the crankcase 104 is lower than the pressure downstream of the pump 114. As such, this pressure differential helps draw the removed oil along the oil passage 129 from the oil separator 130 to the crankcase 104.

The ventilation system 110 further includes an oil pre-separator 128 upstream of the pump 114. The oil pre-separator 128 is configured to reduce a concentration of oil in the expelled gas transported from the crankcase 104 to the pump 114. The oil pre-separator 128 is a passive oil pre-separator. In the illustrated embodiment, the oil pre-separator 128 includes one or more baffles, as will be discussed more in the following. In alternative embodiments (not shown), the oil pre-separator 128 may be any suitable active or passive oil separator. The oil pre-separator 128 is in the outflow portion 126, specifically at the start of the outflow portion in this embodiment where it meets the crankcase 104/gearcase 109.

In the illustrated embodiment, the ventilation system 110 is configured to transport the expelled gas to the intake system 115 for supply to the one or more cylinders 112 via the outflow portion 126. As such, the ventilation system 110 may be considered a closed-loop system. In the illustrated embodiment, expelled gas is transported from the crankcase 104 to the intake system 115 via the outflow portion 126.

In alternative embodiments (not shown), the ventilation system 110 may not be configured transport the expelled gas to the intake system 115. In such embodiments, the ventilation system 110 may be configured to exhaust the expelled gas to the atmosphere (e.g. downstream of the pump 114), and may be considered an open-loop system.

In alternative embodiments (not shown), the ventilation system 110 is configured to draw any suitable gas into the ventilation path 116 (e.g. exhaust gas from combustion in the one or more cylinders 112).

The intake passage 140 is configured to supply air to the cylinders 112 via the cylinder head 106 for combustion. The intake passage 140 in the cylinder head 106 is separate and sealed from the ventilation path 116 in the cylinder head 106.

The intake system 115 includes a compressor 142 along the intake passage 140. The first location 140a is upstream of the compressor 142. The second location 140b is upstream of the compressor 142. The compressor 142 may be a turbocharger, a supercharger, or any device suitable for compressing engine intake air.

The pump 114 is configured to induce a lower pressure in the crankcase 104 relative to a pressure at an inlet 144 to the compressor 142, which may be beneficial for reduced oil consumption and lower emissions. In the illustrated embodiment, the compressor 142 induces a pressure at the inlet 144 of -60 to 0 mbar relative to atmospheric pressure.

As will be discussed more in the following, the ventilation path 116 passes through the rocker cover 107 to the cylinder head 106. The outflow portion 126 also passes through the rocker cover 107. The first and second locations 140a, 140b of the intake passage 140 are positioned adjacent the rocker cover 107. As such, lengths of conduits 146a, 146b fluidly connecting the first and second locations 140a, 140b to the rocker cover 107 are reduced. Advantageously, this helps to minimise exposed portions of the ventilation path 116 and the outflow portion 126 (i.e. portions thereof external to the engine structure 102). In alternative embodiments (not shown), one or both of the first and second locations 140a, 140b may not be positioned adjacent the rocker cover 107.

The outflow portion 126 terminates above the cylinders 112. Here, the term 'above' is intended to include any location above any horizontal plane positioned at the top of the cylinders 112. In the illustrated embodiment, the outflow portion 126 terminates at the second location 140b of the intake passage 140. Advantageously, terminating the outflow portion 126 above the one or more cylinders 112 may help ensure that at least a section of the outflow portion 126 is heated from the combustion within the one or more cylinders 112, in use, helping to prevent freezing of the expelled gas in the outflow portion 126.

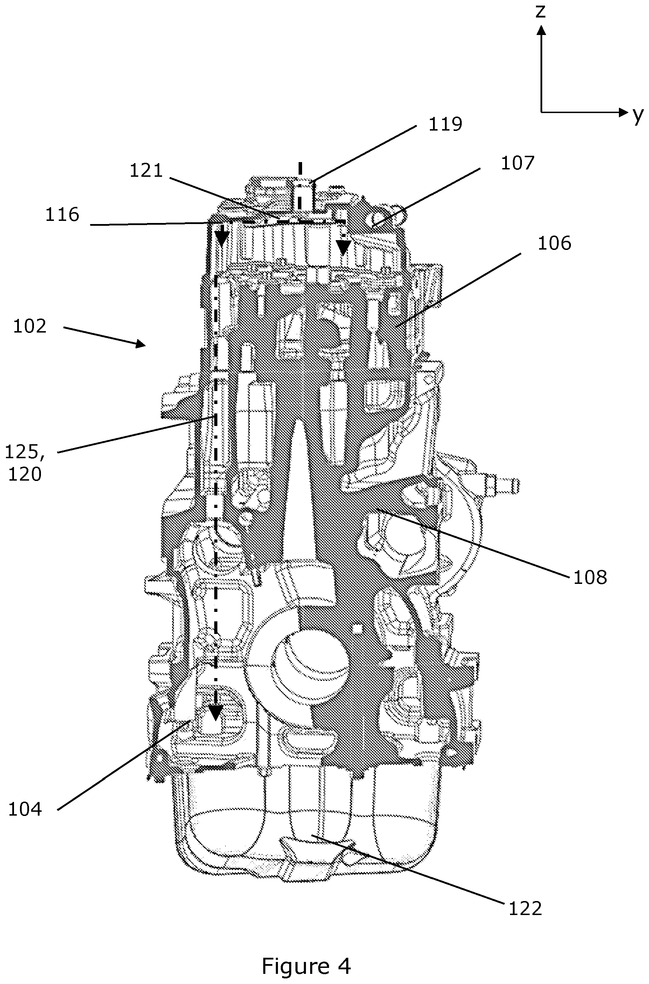

In the following, the ventilation path 116 will be described in further detail with reference to Figures 4 to 7, which are views along the sections W-W, X-X, Y-Y, and Z-Z shown in Figure 1 respectively.

As shown in Figure 4, the rocker cover 107 includes a rocker cover inlet 119 in the ventilation path 116. The pump 114 is configured to transport ventilation gas from the first location 140a to the rocker cover inlet 119, and then to the cylinder head 106. The conduit 146a fluidly connects the rocker cover inlet 119 to the first location 140a of the intake passage 140.

The rocker cover 107 includes a baffle 121 configured to disperse a flow of ventilation gas transported along the ventilation path 116 substantially across the cylinder head 106. As will be discussed below, this helps to distribute the ventilation gas to gas flow passages in the cylinder head 106, as well as helping to inhibit the ventilation gas from interfering with lubrication of components of the valvetrain (e.g. the rocker arms) housed in the rocker cover 107.

In the illustrated embodiment, the baffle 121 is arranged adjacent the rocker cover inlet 119. The baffle 121 is substantially normal to a longitudinal axis of the rocker cover inlet 119. In alternative embodiments (not shown), the baffle 121 may have any suitable configuration.

In the illustrated embodiment, the rocker cover 107 includes a single rocker cover inlet 119 in the ventilation path 116. In alternative embodiments (not shown), the rocker cover 107 may include more than one rocker cover inlet 119 in the ventilation path 116.

The ventilation path 116 includes one or more gas flow passages 120 in the engine structure 102 for transporting ventilation gas from the cylinder head 106 to the crankcase 104. In the illustrated embodiment, the ventilation path 116 includes a plurality of the gas flow passages 120 distributed across and along the crankcase 104. By 'distributed across and along the crankcase' it is intended to mean that outlets of the gas flow passages 120 in the crankcase 104 are distributed in any suitable configuration within the crankcase 104.

In the illustrated embodiment, the gas flow passages 120 include a plurality of oil drain passages for draining oil from the cylinder head 106 to the crankcase 104. During operation of the engine 100, oil sprayed onto components of the valvetrain (e.g. the rocker arms) housed in the rocker cover 107 for lubrication is transported to an oil sump 122 arranged in or below the crankcase 104 via the oil drain passages 120. Although only one oil drain passage 120 is shown in Figure 4, the engine 100 includes a plurality of the oil drain passages 120 distributed across the crankcase 104.

In the illustrated embodiment, the gas flow passages 120 includes all of the oil drain passages in the cylinder head 106. In alternative embodiments (not shown), the gas flow passages 120 may include only one or more of the oil drain passages in the cylinder head 106. In some embodiments, the gas flow passages 120 may additionally or alternatively include one or more pushrod passages (not shown) each arranged to receive one of the pushrods of the valvetrain. Each pushrod passage may extend through the cylinder block 108 and the cylinder head 106 and be in fluid communication with the crankcase 104.

As shown in Figure 4, the oil drain passages 120 pass from the rocker cover 107, through the cylinder head 106, the cylinder block 108, and the crankcase 104 to the oil sump 122. The gas flow passages 120 include the oil drain passages 120 of the cylinder block 108 downstream of the cylinder head 106 and upstream of the crankcase 104.

The oil drain passages 120 may form a network of oil drain passages including one or more inlets in the cylinder head 106 and one or more outlets in the crankcase 104. The number of inlets in the cylinder head 106 may be more than, less than or equal to the number of outlets in the crankcase 104.

Advantageously, transporting ventilation gas from the cylinder head 106 to the crankcase 104 via the oil drain passages 120 helps to flush blow-by gas from an increased volume of the engine structure 102. Utilising all of the oil drainage passages 120 provides a more even airflow and pressure profile for flushing out the crankcase gases and also reduces the opportunity for hydrogen, which has a lower density than air, from rising into the rocker cover or elsewhere. Moreover, using the oil drainage passages negates the need to provide separate dedicated gas flow passages between the cylinder head 106 and the crankcase 104 for the ventilation gas, instead using pre-existing passages in the engine structure 102.

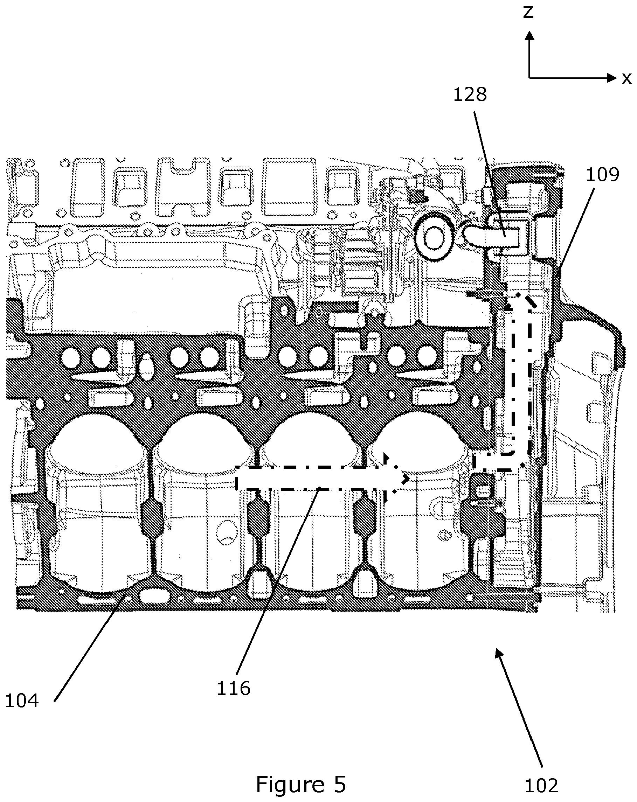

With reference to Figures 5 to 7, part of the outflow portion 126 is arranged in the engine structure 102. The outflow portion 126 passes through one or more of the gearcase 109, the cylinder block 108, the cylinder head 106 and the rocker cover 107.

As outlined in the following, in the illustrated embodiment, the outflow portion 126 passes in series through the gearcase 109, the cylinder block 108, the cylinder head 106 and the rocker cover 107.

Figure 5 shows the general flow direction of ventilation gas and blow-by gas passing through the crankcase 104 and the gearcase 109. The blow-by gas and ventilation gas mixes and flows towards the outlet oil pre-separator 128 along the direction represented by the dashed arrows in Figure 5.

The oil pre-separator 128 is upstream of the pump 114 at an upstream end of the outflow portion 126. In the illustrated embodiment, the oil pre-separator 128 is mounted to the gearcase 109 as described in more detail below.

With further reference to Figure 16, the ventilation gas and blow-by gas flowing through the gearcase 109 to the oil pre-separator 128 is exposed to the gear assembly 339. During operation of the engine 100, the gear assembly 339 sprays oil throughout the gearcase 109 as the gears rotate. As such, the expelled gas will entrain a portion of this oil as it flows through the gearcase 109. The oil pre-separator 128 advantageously reduces the oil content of the expelled gas before it flows downstream to the pump 114.

As will be discussed more in the following, the oil pre-separator 128 includes one or more baffles. The oil pre-separator 128 is configured such that the one or more baffles divert the flow of the expelled gas in the outflow portion 126 resulting in deposition of oil and other liquids (e.g. water generated as a by-product of hydrogen combustion) entrained with the expelled gas in the oil pre-separator 128.

Figure 6 shows a first section 126a of the outflow portion 126 arranged to transport the expelled gas from the oil pre-separator 128, in sequence, to the pump 114, the oil separator 130 and to a gearcase inlet 133. This first section 126a is external to the engine structure 102 in this embodiment.

Figure 6 further shows a second section 126b of the outflow portion 126 arranged to transport the expelled gas from the oil separator 130, through the gearcase 109, to a cylinder block inlet 132. The second section 126b is sealed from the rest of the gearcase 109 such that expelled gas in the second section 126b cannot mix with the gas in the rest of the gearcase 109.

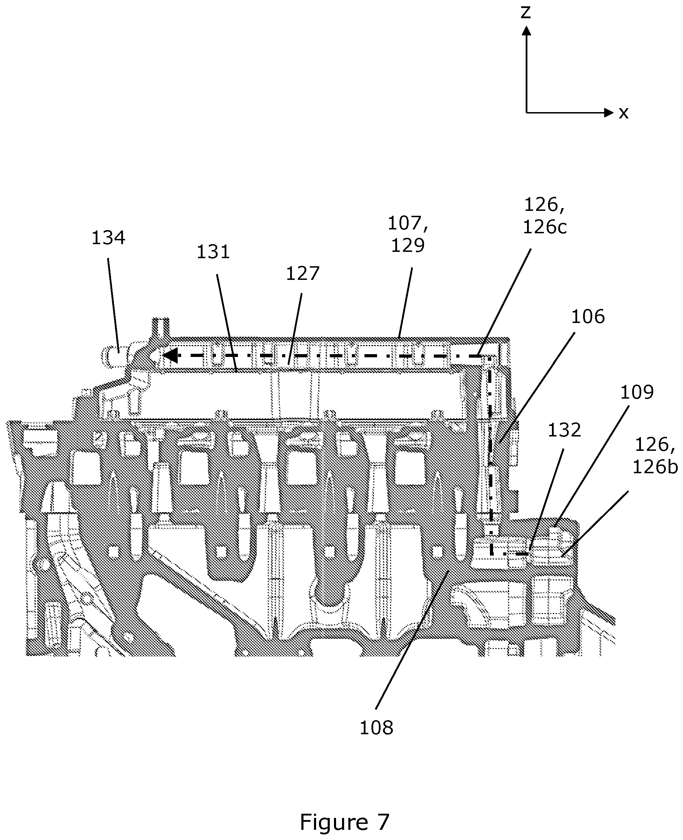

Figure 7 shows a third section 126c of the outflow portion 126 arranged to transport the expelled gas from the cylinder block inlet 132, in sequence, through the cylinder block 108, the cylinder head 106, and the rocker cover 107, to a rocker cover outlet 134 in the rocker cover 107. The conduit 146b fluidly connects the rocker cover outlet 134 to the second location 140b of the intake passage 140 (see Figure 3).

The third section 126c passes through a channel 127 in the rocker cover 107. The channel 127 is formed between the rocker cover 107 and a plate 131 fixed to an interior of the rocker cover 107 (e.g. via one or more fasteners, such as bolts). In the illustrated embodiment, a main body of the rocker cover 107 is formed as a single monolithic piece of material (e.g. via a casting process). The channel 127 leads to the rocker cover outlet 134.

The second and third sections 126b, 126c of the outflow portion 126 passing through the gearcase 109, the engine block 108, the cylinder head and the rocker cover 107 are sealed from the remainder of the engine structure 102. As such, the expelled gas is prevented from flowing into the portions of the cylinder head 106 or rocker cover 107 outside of the outflow portion 126.

The second and third sections 126b, 126c of the outflow portion 126 passing through the gearcase 109, the engine block 108, and the cylinder head are formed principally via a casting process, although certain parts may require a machining operation after the casting process.

In alternative embodiments (not shown), the outflow portion 126 may have any suitable configuration.

The flowrate of blow-by gas, and thus gaseous fuel, into the crankcase 104 is dependent upon a state of operation of the engine 100. For example, the flowrate of the blow-by gas into the crankcase 104 is higher when the engine 100 is operating at high torque output (load) compared to relatively low torque (load), due to the higher volume of air and gaseous fuel injected into the cylinders 112.

As such, since the volume of blow-by gas to be expelled from the crankcase 104 varies with the state of operation of the engine 100, operating the pump 114 to provide a constant pump output would be inefficient, leading to unnecessary engine parasitic losses at least when the engine 100 is operating at low torque (load).

In this embodiment, the pump 114 output is controlled based on one or more determined operating parameters of the engine 100. This enables the flowrate of the expelled gas to be controlled such that the concentration of gaseous fuel in the crankcase 104 is below its lower flammability limit across the operational envelope of the engine 100, whilst minimising engine parasitic losses.

In this embodiment, the determined operating parameters are engine speed and engine torque (load). The one or more determined operating parameters may include additional and/or alternative operating parameters of the engine 100 in other embodiments.

It has been found that engine speed and engine torque (load) provide a reliable indication of the flowrate of blow-by gas flowing into the crankcase 104. Once this indication of blow-by flowrate is established, it can be utilised to determine the flowrate of ventilation gas needed to dilute the blow-by gas to below its lower flammability limit and/or the flowrate of expelled gas, being the sum of blow-by flowrate and ventilation gas flowrate. The flowrate of expelled gas obtained from the operating parameters is referred to below as the setpoint flowrate.

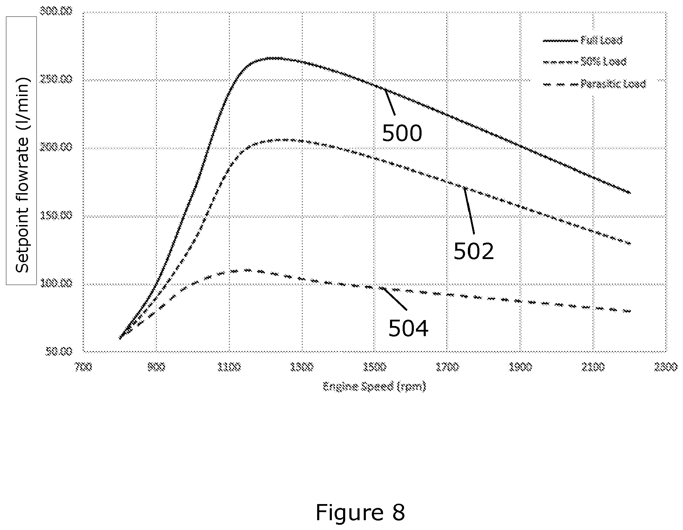

Figure 8 shows three exemplary plots 500, 502, 504 of the setpoint flowrate of the expelled gas with respect to the engine speed of the engine 100 for three different engine torque (load) conditions. Such plots may be generated via calibration testing of an exemplary engine 100.

The first plot 500 corresponds to a maximum torque (load) condition of the engine 100, in which the engine 100 outputs maximum torque (load) at each engine speed. As shown in Figure 8, the maximum setpoint flowrate for the maximum torque (load) condition is at an engine speed of approximately 1150-1200 RPM, which corresponds to the overall maximum output torque of the engine 100 in the present embodiment.

The second plot 502 corresponds to a 50% maximum torque (load) condition of the engine 100, in which the engine 100 outputs half the maximum torque (load) at each engine speed. The third plot 504 corresponds to a parasitic load condition in which the engine 100 outputs the minimum load required to power the engine's ancillary devices at each engine speed.

With reference to Figure 2, the ventilation system 110 includes a controller 150 configured to control the output of the pump 114 based on one or more determined operating parameters of the engine 100. The controller 150 may form part of an engine control unit (ECU) of the engine 100, or may be a standalone controller.

The controller 150 may comprise any suitable circuitry to achieve control of pump 114 and follow the control methods described herein. The controller may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 150 may include an associated memory or the memory may be located locally to the controller or remotely. The memory may be a non-volatile flash memory.

In this embodiment, the controller 150 is configured to control the pump 114 based on the one or more determined operating parameters via a look-up table or a map stored in the memory. The look-up table incorporates a suitable number of values from the plots of Figure 8 in a matrix of load, engine speed and corresponding setpoint flowrate. The controller 150 may be configured to interpolate to obtain setpoint flowrates for intermediate values of engine load and engine speed.

Where the determined operating parameters are engine speed and engine torque, these may be determined or obtained by the engine ECU for the operation of the engine 100 and supplied to the controller 150 via a signal line 152 (e.g. a CAN bus line as shown in Figure 2).

In alternative embodiments (not shown), the controller 150 may be configured to control the pump 114 via any suitable means, such as via a physics-based model of the engine 100 for example.

In the illustrated embodiment, the pump 114 is a variable speed pump driven in a fixed relationship by an electric motor, e.g. a variable speed DC electric motor. The controller 150 is configured to control a speed of the electric motor, and therefore the pump 114, based on the one or more determined operating parameters. For example, in embodiments in which the pump 114 includes a revolving element, such as an impeller, to pump fluid, the controller 150 may be configured to control the rotational speed of the revolving element by providing suitable control signals to the electric motor based on the impeller speed required to achieve a particular setpoint flowrate and the gear ratio (if any) between the electric motor and the impeller.

In alternative embodiments (not shown), the controller 150 may be configured to additionally or alternatively control an output of the pump 114 by mechanisms other than by adjusting pump speed. For example, the controller 150 may be configured to control a position of one or more rotational vanes or blades within the pump 114, or a position of an output valve of the pump 114. In such embodiments, the pump 114 may not be a variable speed pump.

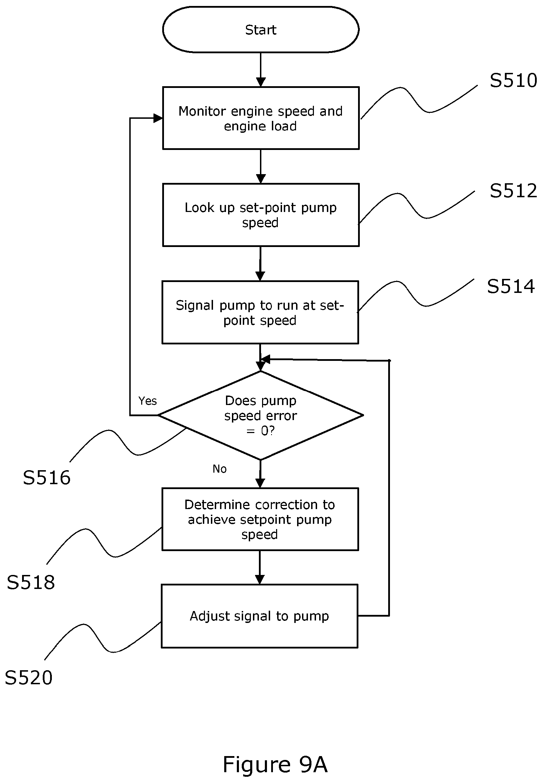

With reference to the flowchart of Figure 9A, one embodiment of a ventilation control method is described. In this embodiment, the controller 150 monitors the engine torque (load) and engine speed at step S510 and queries the look-up table at step S512 to determine a setpoint pump speed based on the engine 100 torque and speed values (and the resulting setpoint flowrate). The controller 150 subsequently signals the electric motor to run the pump 114 at the setpoint speed at step S514 (e.g. via a pulse width modulation signal).

In this embodiment, the electric motor is of a type that provides feedback of its actual speed to the controller 150, e.g. via use of a position encoder, Hall effect sensor, or by monitoring back EMF. This enables the controller 150 to check that the setpoint pump speed is being achieved at step S516. If the speed error is zero (or within a suitable range) the process returns to monitoring engine speed and load at step S510. If the speed error is not zero (or not within a suitable range), the controller 150 determines a correction to the signal at step S518 and at step S520 adjusts the signal to the electric motor accordingly. The controller 150 may use any suitable control logic for determining the correction. For example, the controller 150 may use Proportional-Integral-Derivative (PID) control to determine the correction.

As such, in this embodiment, the controller 150 controls the pump 114 speed in a closed-loop. However, in this embodiment, control of flowrate of the expelled gas is open-loop, as other factors such as restrictions in the ventilation path 116 may affect flow rate and not be accounted for in this embodiment.

Calibration may be required using a representative ventilation system 110 to relate the pump speed to the setpoint flowrate of expelled gas to ensure that the concentration of gaseous fuel in the crankcase 104 is below its lower flammability limit.

A maximum setpoint pump speed is typically required when the one or more determined operating parameters correspond to a maximum output torque (load) of the engine 100 and/or speed of the engine 100.

It has been found that the maximum flowrate of blow-by gas into the crankcase 104 substantially corresponds to the maximum output torque (load) and/or speed of the engine 100. Thus, determining such a maximum setpoint pump speed helps to provide efficient control of the flowrate of the expelled gas across the operational envelope of the engine 100.

For off-highway engines of the type described herein, the maximum output torque (load) of the engine 100 is in the range of 1000 to 2500 RPM, preferably in the range of 1100 to 1400 RPM, for example, approximately 1150-1200 RPM. From the plots of Figure 8 it can be seen that above 1150-1200 rpm the setpoint flowrate reduces with increasing engine speed as a consequence of the lower maximum torque (load) the engine can produce at higher engine speeds. In alternative embodiments, the maximum output torque (load) of the engine 100 may be at any suitable engine speed.

In this embodiment, the controller 150 is configured to control the pump output based on the setpoint flowrate of the expelled gas - i.e. a flowrate that has been determined to maintain the concentration of gaseous fuel in the crankcase 104 to below its lower flammability limit (4% for hydrogen). However, in other embodiments, the controller may directly obtain an electric motor/pump 114 speed in accordance with the determined operating parameters, without the setpoint flowrate being determined by the controller as an intervening step. In other words, the lookup table has setpoint pump speed directly as the determined output value for a given engine load and engine speed.

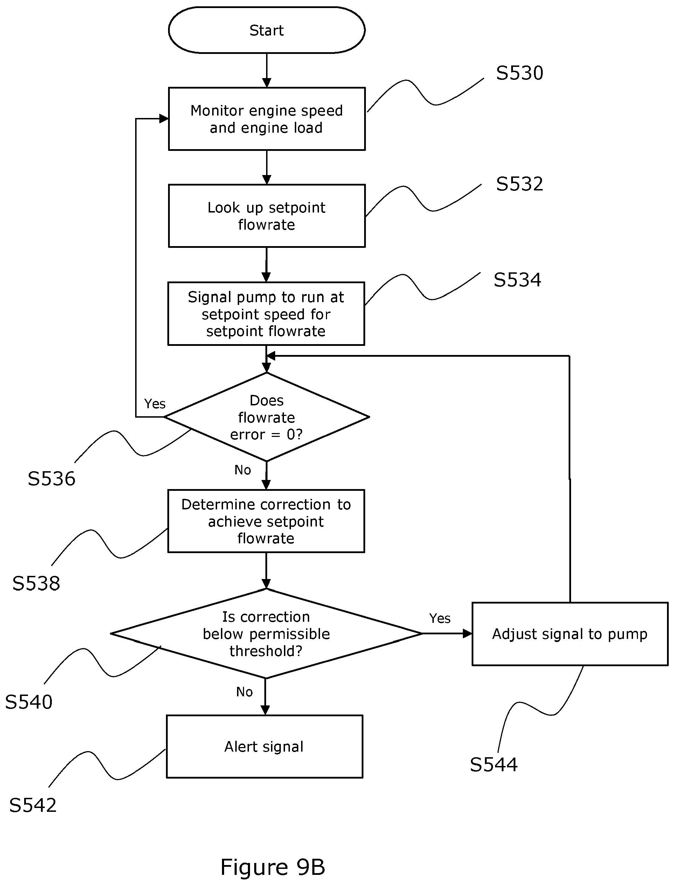

With reference to Figure 9B another embodiment of the ventilation control method is described. In this embodiment the setpoint flowrate is controlled in closed-loop rather than open-loop.

In step S530 the controller 150 determines the engine torque (load) and engine speed. At step S532 and queries the look-up table at step S532 to obtain a setpoint flowrate. The controller 150 then signals the pump 114 to operate at its expected setpoint speed to provide that setpoint flowrate at step S534. At step S536 the controller 150 monitors an actual parameter indicative of flowrate, using a suitable measurement method. This may be a sensor measuring a pressure differential across a flow restrictor as described in more detail below, or any other suitable airflow measurement method. If required, the controller 150 converts the parameter indicative of flowrate to an actual flowrate and at step S536 the controller 150 compares the actual flowrate to the setpoint flowrate to obtain a flowrate error. If the flowrate error is zero (or within a suitable range) the process returns to monitoring engine speed and load at step S530.

If the flowrate error is not zero (or not within a suitable range), the controller 150 determines a correction to the pump speed signal at step S538. At step S540 the controller 150 determines if this error correction is below a predetermined threshold. A large correction in excess of the predetermined threshold (i.e. a large increase or decrease in pump speed) may be indicative of a malfunction of the ventilation system 110, for example an obstruction or blockage due to ice formation, a gas leak, or a pump or sensor failure.

If not within a permissible amount, at step S542, the controller 150 outputs an alert. The alert output may signal an audio/visual device 154 (Figure 2) in an operator station of the machine 10, such as a warning light, buzzer, or display, for example. In some embodiments, the engine 100 may be configured to shutdown when the controller 150 outputs the alert signal. In other embodiments the alert may additionally or alternatively be transmitted by a suitable telematics system to a remote location.

In other embodiments the controller 150 may determine that the alert signal is issued based on the actual and expected pump speed after the pump speed has been corrected, for example, rather than the correction itself. In addition the controller 150 may impose a delay to issuing an alert. This may be advantageous if flow is obstructed due to icing, and running the engine for a period is likely to melt the ice and clear the obstruction.

If the correction is below the permissible threshold, the controller 150 adjusts the signal to the pump 114 at step S544 such that the actual flowrate corresponds substantially to the setpoint flowrate. The controller 150 may use any suitable control logic for determining the correction.

As such, the controller 150 in this embodiment controls the flowrate of the expelled gas closed-loop via control of the pump output (via speed as described, but in other embodiments by altering vane position etc.). Advantageously, by feeding back actual flowrate to the controller 150, and adjusting the pump speed, more accurate control of the flowrate of the expelled gas may be achieved, especially for different operating conditions, such as due to the wear of components over the life of an engine or if there are unexpected obstructions or blockages (e.g. due to ice formation) in the ventilation path 116.

The controller 150 may operate in the open-loop mode e.g. initially when the engine 100 is first started, and then may operate in the closed-loop mode after a predetermined time has elapsed from engine start. In alternative embodiments, the controller 150 may be configured to only operate in either the open-loop or closed-loop mode.

In other embodiments, the controller 150 may control the pump 114 in open-loop - i.e. signal the setpoint pump speed for a particular combination of engine speed and engine and not monitor that the pump 114 achieves this speed.

In other embodiments the setpoint flowrate may be of the ventilation gas rather than the expelled gas.

In practical terms, where the amount of blow-by gas is modelled or mapped as described above, the flowrate may be set to achieve a lower gaseous fuel concentration than the lower flammability limit to maintain a suitable safety margin.

The ventilation system 110 (Figure 2) includes a monitoring system 167 configured to monitor a parameter indicative of a flowrate of the expelled gas. The monitoring system 167 is configured to provide one or more outputs based on the monitored parameter.

Advantageously, monitoring the flowrate of the expelled gas may enable a determination of whether the concentration of gaseous fuel in the crankcase 104 is above its lower flammability limit, without requiring a gas concentration sensor in the crankcase 104, or as a back-up to a gas concentration sensor. Such sensors tend to be relatively high cost and prone to damage (e.g. from exposure to heat and blow-by gas within the crankcase 104). Moreover, by monitoring the flowrate of the expelled gas, it may be determined whether there are any blockages or obstructions (e.g. due to ice formation) in the ventilation path 116 or other anomalies in operation, which may lead to an unexpected increase in the concentration of gaseous fuel in the crankcase 104.

In the illustrated embodiment, the monitoring system 167 includes the controller 150. In alternative embodiments (not shown), the monitoring system 167 may include an additional or alternative controller or processor.

The monitored parameter indicative of flowrate corresponds to a pressure differential ΔP of the expelled gas. In alternative embodiments (not shown), the monitored parameter indicative of flowrate may be a flowrate of the expelled gas (e.g. as measured via a flow meter). In the illustrated embodiment, the monitored parameter corresponds to a pressure differential between first and second locations of the ventilation path 116. Advantageously, a pressure differential ΔP of the ventilation gas or expelled gas may be determined via a relatively low cost sensor (e.g. a pressure transducer).

The flowing ventilation/expelled gas generates a pressure drop across each component of the ventilation system 110. This pressure drop is proportional to the flowrate, and can be used to measure the ventilation/expelled gas flowrate of the ventilation system 110.

In the illustrated embodiment, the pressure drop is measured across the oil separator 130, as described in more detail below. In alternative embodiments (not shown), the pressure drop can be measured across any suitable component of the ventilation system 110.

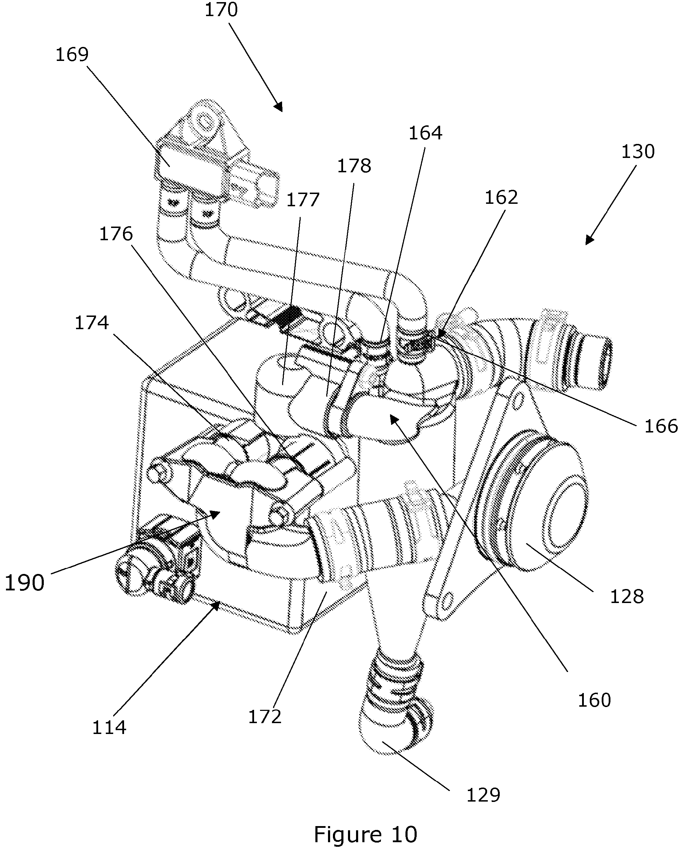

With reference to Figure 10, the oil separator 130 includes an inlet 160 and an outlet 162. The inlet 160 include includes a first pressure take-off point 164. The outlet includes a second pressure take-off point 166. The pressure differential ΔP corresponds to the pressure difference between the first and second pressure take-off points 164, 166. The first and second pressure take-off points 164, 166 are located adjacent each other.

With further reference to Figure 2, the monitoring system 167 includes at least one pressure transducer 169 in fluid flow communication with the first and second pressure take-off points 164, 166.

In the illustrated embodiment, the monitoring system 167 includes a single pressure transducer 169 in fluid flow communication with the first and second pressure take-off points 164, 166. In alternative embodiments (not shown), the monitoring system 167 may include two pressure transducers 169, each in fluid flow communication with one of pressure take-off points 164, 166. The difference between the pressure measured by these two transducers is the measured ΔP.

In the illustrated embodiment, the controller 150 receives a parameter indicative of the pressure differential ΔP (e.g. the pressure differential ΔP) from the at least one pressure transducer 169.

In alternative embodiments (not shown), the first pressure take-off point 164 may be spaced upstream from the oil separator 130 and/or the second pressure take-off point 166 may be spaced downstream from the oil separator 130. This helps to increase the distance along the ventilation path 116 between the first and second pressure take-off points 164, 166, increasing the measured pressure differential, which enables a more accurate flowrate to be determined.

For example, with reference to Figure 10, the first pressure take-off point 164 may be adjacent an outlet 178 of the pump 114 (e.g. an outlet chamber 177 of the pump 114 (discussed more below), or a manifold connected to the outlet 178, may include the first pressure take-off point 164). Additionally or alternatively, the second pressure take-off point 166 may be nearer to the gearcase inlet 133 than it is to the oil separator 130 with respect to the ventilation path 116.

In some embodiments, a distance along the ventilation path 116 between the first and second pressure take-off points 164, 166 may be at least two (e.g. three or more, or four or more) times greater than a distance along the ventilation path 116 between the oil separator inlet 160 and the oil separator outlet 162.

The one or more outputs provided by the monitoring system 167 includes a control output. The monitoring system 167 is configured to control the output of the pump 114 via the control output. In the illustrated embodiment, the monitoring system 167 is configured to control the pump output (e.g. based on the parameter indicative of the pressure differential ΔP) via the controller 150 as previously described. The control output is a control signal (e.g. a pulse width modulation signal) sent from the controller 150 to the pump 114.

The one or more outputs provided by the monitoring system 167 includes an alert output. The monitoring system 167 provides the alert output when the monitored parameter indicates that the flowrate of the expelled gas is above a setpoint flowrate error threshold (e.g. as described above in relation to Figure 9B). The monitoring system may also operate in conjunction with the open-loop flowrate control as described in conjunction with Figure 9A to provide an alert without there being a feedback loop to adjust the pump output.

Advantageously, such a configuration of the monitoring system 167 may help to prevent the concentration of gaseous fuel in the crankcase 104 from rising above its lower flammability limit, for example due to an obstruction or blockage (e.g. due to ice formation) in the ventilation path 116.

The monitoring system 167 is configured to determine a parameter indicative of the flowrate threshold based on the one or more determined operating parameters of the engine (e.g. engine speed and/or engine torque of the engine 100). Advantageously, this may enable the parameter indicative of the flowrate threshold to be based on a setpoint flowrate of the expelled gas according to the one or more determined operating parameters.

In the illustrated embodiment, the engine 100 is configured to shutdown when the monitoring system 167 provides the alert output. Advantageously, this may help to prevent the concentration of gaseous fuel in the crankcase 104 from rising above its lower flammability limit.

In embodiments in which the engine 100 is used as a prime mover in a working machine 10, the working machine may be configured to generate a visual and/or audible warning to an operator of the working machine and/or remotely via a suitable telematics system, when the monitoring system 167 provides the alert output. Advantageously, this may indicate to the operator that they need to take action (e.g. shutting down the engine 100) to prevent gaseous fuel in the crankcase 104 from rising above its lower flammability limit.

In alternative embodiments, the monitoring system 167 may be configured to provide only one of the control output and the alert output.

In the illustrated embodiment, the pump 114 is a side channel pump (also known as a side channel blower).

Figure 10 shows a pump assembly 170 including the pump 114.

The pump 114 includes a housing 172 including a first inlet 174, a second inlet 176, and an outlet 178. The pump 114 includes an impeller (not shown) rotatable within the housing 172 about a rotation axis so as to move fluid at the inlets 174, 176 to the outlet 178. The first and second inlets 174, 176 are arranged either side of a rotation plane of the impeller.

In the illustrated embodiment, the first and second inlets 174, 176 are adjacent each other. As shown in Figure 10, the pump 114 includes an outlet chamber 177 including the outlet 178. Fluid flowing into the inlets 174, 176 flows around a circumference of the housing 172 on the respective side of the impeller's rotation plane before merging in the outlet chamber 177 and flowing through the outlet 178. The outlet chamber 177 is interposed between the first and second inlets 174, 176.

The pump 114 is configured to such that rotation of the impeller about its rotation axis generates first and second counter-rotating vortices in the fluid moving from the first and second inlets 174, 176 to the outlet 178 respectively. The counter-rotating vortices flow on opposite sides of the rotational plane of the impeller.

In the illustrated embodiment, the impeller is rotated via an electric motor. In alternative embodiments (not shown), the impeller may be rotated via any suitable power source.

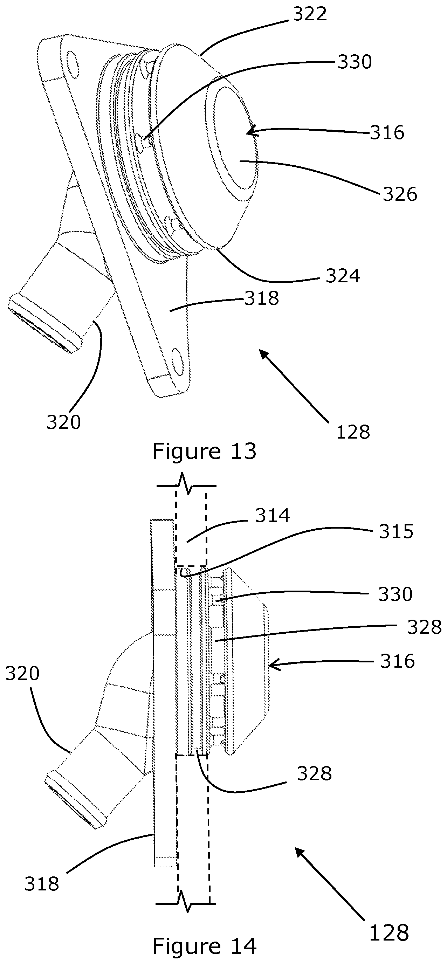

The pump assembly 170 further includes a vortex generator 190 in fluid communication with the first and second inlets 174, 176. The vortex generator 190 is configured to generate first and second counter-rotating inlet vortices Vi1, Vi2 (Figure 13) in fluid moving into the first and second inlets 174, 176 respectively.

Advantageously, generating counter-rotating inlet vortices Vi1, Vi2 in fluid moving into the first and second inlets 174, 176 helps to increase the efficiency of the pump 114, since the work required by the pump 114 to induce the counter-rotating vortices in the fluid moving from the inlets 174, 176 to the outlet 178 is reduced.

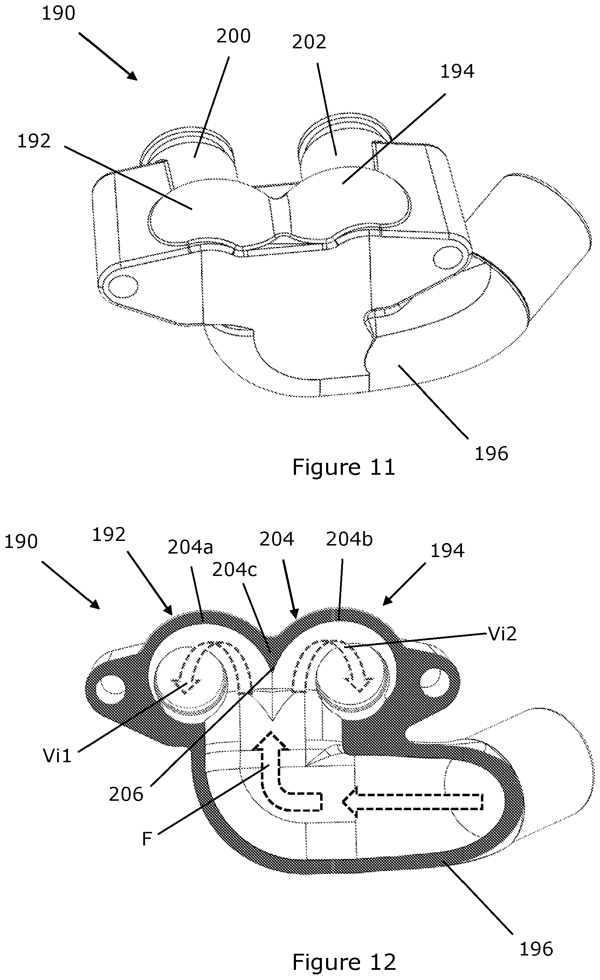

With reference to Figures 11 and 12, the vortex generator 190 includes first and second vortex chambers 192, 194 configured to generate the first and second inlet vortices Vi1, Vi2 respectively. The vortex generator 190 includes an inlet 196 in fluid communication with the vortex chambers 192, 194. The vortex generator 190 is configured such that fluid travels from the inlet 196 to the first and second inlets 174, 176 of the pump 114 via the first and second vortex chambers 192, 194 respectively.

The vortex generator 190 is configured such that the first and second vortex chambers 192, 194 receive a circumferential inlet flow F from the inlet 196. The circumferential inlet flow F (represented by a dashed arrow in Figure 12) is arranged to flow along a circumference of the first and second vortex chambers 192, 194 so as to form the counter-rotating inlet vortices Vi1, Vi2. Advantageously, the circumferential inlet flow F enables the vortex chambers 192, 194 to generate the first and second inlet vortices Vi1, Vi2 without requiring any moving parts.

As shown in Figure 11, the vortex generator 190 includes first and second outlets 200, 202. The outlets 200, 202 fluidly connect the respective first and second vortex chambers 192, 194 to the respective first and second inlets 174, 176 of the pump 114. The vortex generator 190 is configured such that the first and second inlet vortices Vi1, Vi2 travel through the first and second outlets 200, 202 respectively.

In the illustrated embodiment, the outlets 200, 202 are substantially orthogonal to a direction of the circumferential inlet flow F. In alternative embodiments (not shown), the outlets 200, 202 may extend at any suitable angle to the direction of the circumferential inlet flow F.

As shown in Figure 11, each of the first and second vortex chambers 192, 194 is substantially bowl-shaped. Such a shape may help to maximise the strength of the first and second inlet vortices Vi1, Vi2 generated therein. In alternative embodiments (not shown), the vortex chambers 192, 194 may have any suitable shape and configuration.

As shown in Figure 12, the vortex generator 190 includes a wall 204 common to the first and second vortex chambers 192, 194 shaped to split fluid flowing from the inlet 196 towards the wall 204 into two counter-rotating inlet vortices corresponding to the first and second inlet vortices Vi1, Vi2. The wall 204 includes two arcuate portions 204a, 204b joined via a ridge-shaped portion 204c. An apex 206 of the ridge-shaped portion 204c divides the first and second vortex chambers 192, 194.

As shown in Figure 10, the vortex generator 190 is mounted to the housing 172 of the pump 114. In the illustrated embodiment, fasteners, such as bolts, are used to mount the vortex generator 190 to the housing 172. In alternative embodiments (not shown), the vortex generator 190 may be mounted to the pump 114 via any suitable means, or may be part of the pump 114 inlet casting.

It will be appreciated that although the vortex generator 190 has been described in relation to its use in a side channel pump in a particular internal combustion engine application, it is not limited to such use and may also be beneficial for side channel pumps in other industrial applications. Whilst in this embodiment the pump is electrically driven, in other embodiments it may instead be mechanically or hydraulically driven, for example.

Referring now to Figures 13, 14 and 15, the oil pre-separator 128 can be seen in more detail. The oil pre-separator 128 is arranged to be mounted within the crankcase 104, or in this embodiment, the gearcase 109 of the internal combustion engine 100. In alternative embodiments (not shown), the oil pre-separator 128 may be mounted adjacent to the engine structure 102 (i.e. outside of the engine structure 102). For example, the oil pre-separator 128 may be mounted adjacent to the gearcase 109 or the crankcase 104.

The pre-separator 128 comprises a withdrawal conduit 310 defining a mouth 312 for the withdrawal of gases from the gearcase 109 through an aperture 315 in a wall 314 of the gearcase 109.

In this embodiment, the mouth 312 terminates in an out-turned lip 332.

In this embodiment, the pre-separator 128 is a self-contained unit that is mounted to the wall 314 of the gear case 109 by a mounting flange 318. The mounting flange 318 is arranged so that it may be mounted to an external face of the wall 314, via suitable fasteners, with the mouth 312 projecting into the gearcase 109. The withdrawal conduit defines an axis C and the mounting flange 318 is substantially normal to this axis. In another embodiment (not shown) the flange 318 can be inclined at any suitable angle to axis C.

The downstream end of the withdrawal conduit 310 terminates in a spigot 320 to which a suitable hose may be connected, as is visible in Figure 10.

A plate 316 is spaced axially from and overlying the mouth 312, to act as a baffle.

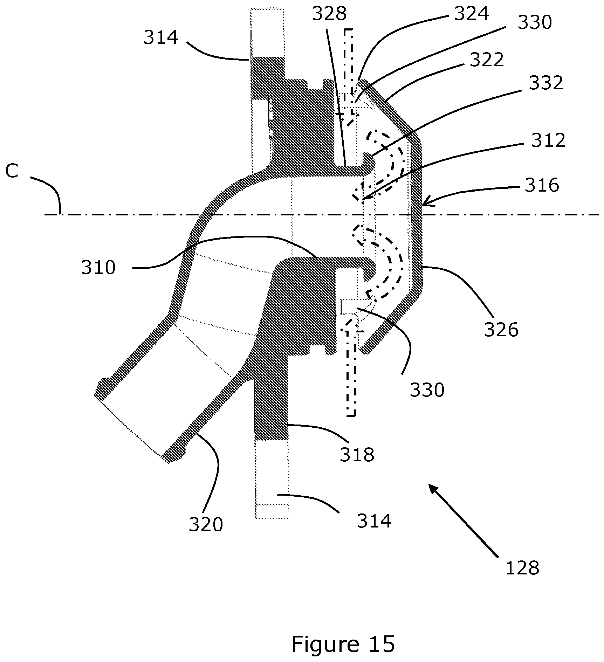

With particular reference to Figure 15, the plate 316 comprises an angled portion 322 arranged to extend from the axially spaced position and terminate at edge 324 at least axially aligned with or axially overlapping the mouth. In this embodiment, the edge 324 axially overlaps the mouth 312. The edge 324 is transversely spaced from the mouth. The plate 316 also comprises a planar portion 326 which overlies the mouth 312, and the angled portion 322 extends around a perimeter of the planar portion. As can be seen, the planar portion 326 is circular and angled portion 322 is concentrically arranged around the circular portion. In other embodiments the planar portion 326 may be omitted or, for example, be square or triangular and the angled portion 322 may form a truncated pyramid shape.

The pre-separator 128 comprises a flow diverter 328 extending around the withdrawal conduit to divert oil running down the wall 314 of the gearcase 109 away from the mouth 312 of the withdrawal conduit 310. In this embodiment, the mouth 312 having the out-turned lip 332 and standing proud of the flange 318 acts as the flow diverter 328.

A series of legs 330 support the plate 316 on the flange 318, whilst providing a pathway for the expelled gas to enter the pre-separator 128 and flow via a tortuous route illustrated by the dashed arrows into the mouth 312.

The dimensions of the various components described above have been carefully chosen to reduce the carry-over of oil into the pump 114 and oil separator 130.

The ratio between the diameter or minimum width of the plate and the internal diameter of the withdrawal conduit 310 may be between around 4:1 to 2.5:1, e.g. around 3:1. For example the diameter of the plate 316 may be around 66mm and the diameter of the withdrawal conduit around 22mm. The angled portion of the plate 316 may terminate around 5-6mm axially away from the adjacent wall - e.g. the wall of the flange 318. In other words, the legs are 5-6mm in length. The out-turned lip 332 may have a greater spacing from the wall of the flow diverter 328 than the edge 324, e.g. at least 8mm. The out-turned lip 332 may extend around at least 6mm, e.g. 9mm beyond the inside diameter of the withdrawal conduit 310 to define a lip of at least 2mm, e.g. 4mm to provide a further barrier to the flow of oil into the mouth 312.

Figure 16 shows the oil pre-separator 128 mounted in-situ within the gearcase 109, above and transversely offset from a camshaft gear 340, which is itself driven by a crankshaft gear 342. It will be appreciated that when the engine 100 is in operation, these gears will splash oil within the gearcase 109 and create a mist suspended within the gas of the gearcase 109. The tortuous indirect path for expelled gas through the pre-separator 128 inhibits splashed oil from entering the withdrawal conduit 310, and also generates flow conditions which precipitate the suspended oil out of the gas.

The pre-separator 128 as described above has been found to reduce oil concentration in the gases by a factor of at least 2.5, more typically at least a factor of 4 when operating at flowrates required for ventilating the crankcase of a hydrogen fuelled engine: at least 30l/min per litre of displacement of the internal combustion engine, typically in a range of 30-80l/min per litre of displacement of the internal combustion engine.

In combination with the oil separator 130, the pre-separator 128 has been found to reduce oil carry over in the expelled gas flow path downstream of the separator to less than or equal to 1g/hr, typically less than or equal to 0.5g/hr of engine operation.

As described above, the engine 100 comprises an engine structure 102. The engine structure is typically formed of one or more cast components that provide the structural strength of the engine 100 and mount various moving components within, e.g. one or more pistons, as is well known. In particular, the engine structure 102 comprises at least the cylinder block 108, the crankcase 104, and the gearcase 109 in this embodiment.

In the figures, the engine structure 102 is depicted such that the axes of the cylinders 112 within are arranged vertically within the cylinder block 108 aligned to axis z (indicated in Figure 1). The crankcase 104 is directly below the cylinder block 108 in the axis z. The engine structure 102 comprises four cylinders 112 arranged inline in this embodiment along an axis x which is normal to axis z. The gearcase 109 is located at one end of the cylinder block 108 and crankcase 104 along the axis x. Conventionally the gearcase 109 is considered to be at the rear of the cylinder block 108/crankcase 104, reflecting a conventional installation of the engine 100 in a working machine 10 with the axis x aligned fore-aft with the working machine 10 and the engine output being at the rear. It will be appreciated that in practice the engine 100 may in fact be oriented differently, e.g. transversely with respect to the working machine 10 and/or inclined so the cylinders 112 have axis inclined with respect to the axis z.

Further, the gearcase 109 has a portion thereof projecting transversely beyond the side of the cylinder block 108/crankcase 104 in a further axis y which is normal to both axes z and x. In this embodiment the gearcase 109 projects from the left hand side of the cylinder block 108/crankcase 104, but in other embodiments may project from the right hand side.

The pump 114 is arranged to expel blow-by gas contained within the crankcase 104 and is positioned adjacent to the engine structure 102. A passage extends from the gearcase 109 to the pump 114, such that the pump 114 is in fluid flow communication with the crankcase 104. In this embodiment the passage is the outflow portion 126 for the withdrawal of blow-by gas, but in other embodiments the passage may be an inlet passage for blowing ventilation gas into the crankcase 104. The passage includes the oil pre-separator 128 upstream of the pump 114.

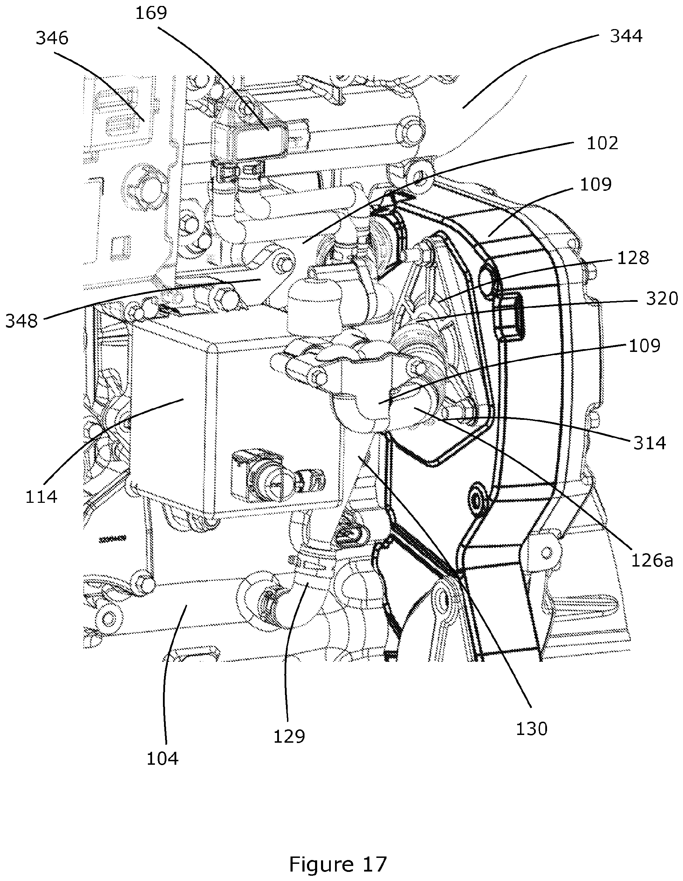

The pump 114 is positioned adjacent a side of the engine structure 102, for example to a side of the cylinder block 108, forward of the gearcase 109. In this embodiment the pump 114 is mounted to the engine structure 102 as an "on engine" component. That is to say, it is fitted to the engine structure 102 at an engine assembly plant and is then mounted in a working machine 10 with the pump 114 in situ at a machine assembly plant. The engine assembly plant may be at a location remote from the working machine 10 assembly plant, or may be on the same site. In either situation it is typically more efficient to provide the pump 114 "on engine", because mounting such components to an exterior of an engine is generally accessible. By contrast, fitting a pump separately into an engine bay of a working machine 10 and connecting various hoses and power supplies once the engine 100 has been fitted is often less accessible and therefore more time consuming and costly. Figure 17 shows the pump 114 mounted to the engine structure 102 by an adapter bracket 348, so it is able to be bolted to a pre-existing mounting on the engine structure 102. In other embodiments the pump 114 may be directly mounted, further enhancing the compactness of the installation.

In addition, gaseous fuelled engines, such as hydrogen fuelled engines, typically do not require a fuel injection pump, since the gas is stored under pressure in the tank 12 on the machine 10 (Figure 22) and is supplied at greater than fuel injection pressure, and so does not require a pump to pressurise it. The pump 114 mounting location is often where a fuel injection pump is fitted on liquid (e.g. diesel) fuelled engines. Therefore in case of the base engine used for conversion to gaseous fuel is a diesel engine, the location of the fuel injection pump becomes available for other uses in gaseous fuelled engines.

The pump 114 is at least partially positioned within a space envelope defined by a virtual longitudinal projection forward of the gearcase 109. In some embodiments the pump 114 may be fully mounted within the envelope. This arrangement further minimises the overall space envelope required for the pump 114 and the engine 100 as a whole. This may negate the need for an engine bay or engine pod on a particular machine to be reconfigured if the machine is to accept a gaseous fuelled engine in place of a conventional diesel fuelled engine, for example.

One or more ancillary components are typically mounted to the engine structure 102 in the region around the pump 114. In this embodiment these components include a lubrication oil filler 341, a lubrication oil cooler 343, an inlet manifold 344, and/or an electronic control unit 346 (see Figure 3). The pump 114 projects transversely less than or equal to the maximum width of the one or more of the ancillary components. This further increases the likelihood that the engine 100 will not require a different installation envelope compared to an equivalent engine that is liquid fuelled, e.g. by diesel.

In this embodiment the ancillary components restrict the space envelope available in the x and z directions. As a result, the pump occupies a space envelope less than or equal to 200mm in a longitudinal direction (x), 240mm in a vertical direction and 175mm in a transverse direction (y).

The first section 126a of the outflow portion 126 extends between the pump 114 and the aperture 315 in the gearcase. Specifically, in this embodiment, the first section 126a connects to the spigot 320 of the oil pre-separator 128, which mounts to the aperture 315 as can be seen in Figures 14 and 17.

The aperture 315 is in a forward-facing wall 314 of the gearcase 109. In embodiments where the engine is derived from a liquid fuelled engine, an aperture is typically provided in this location for taking a driveshaft from the gearcase 109 to a fuel injection pump, so it may be possible to re-purpose this aperture without the need to reconfigure the engine.

As discussed above, the pump 114 in this embodiment is a side channel pump. The pump 114 is mounted such that the rotational axis of the impeller is substantially parallel to the longitudinal axis x.

In alternative embodiments, the rotational axis of the impeller may be substantially vertical in a normal operating orientation of the engine 100. For example, the rotational axis of the impeller may be substantially parallel to an axis of the cylinders 112. Such an orientation of the impeller may assist in drainage of oil from the pump 114.

The pump 114 is a self-contained unit with an electric drive motor which is positioned towards the front of the engine 100, with the impeller towards the rear. The first and second inlets 174, 176 face transversely outwards and the outlet 178 faces in a rearward direction. This arrangement may further minimise the required space envelope.

With reference to Figures 10 and 17, the downstream oil separator 130 is located longitudinally between the forward facing wall 314 of the gearcase 109 and the pump 114. This location enables the first section 126a of the outflow portion 126 from the oil pre-separator 128 to be routed around the oil separator 130 to the first and second inlets 174 and 176 of the pump 114.

Additionally, it enables the pump outlet 178 to lead directly into the oil separator inlet 160 and the oil separator gas outlet 162 to be routed back into the second section 126b of the outflow portion 126 in the gearcase 109. The oil passage 129 from the oil separator 130 back to the crankcase 104 can also be short and run under gravity. In this embodiment the oil separator 130 is mounted to the pump 114 via fasteners.

This arrangement enables the longitudinal dimension of the space envelope occupied by pump 114 and the oil separator 130 to be less or equal to 200mm.

In one embodiment, the oil pre-separator 128, pump 114 and oil separator 130 are provided as a pre-assembled unit to be mounted to the engine 100. This pre-assembled unit may also comprise hoses for the expelled gas from the oil separator and oil return.

In the illustrated embodiment, the oil separator inlet 160 is arranged substantially at the same level as the outlet 178 of the pump 114. In alternative embodiments, the oil separator inlet 160 may be arranged below the pump outlet 178. Advantageously this may assist in the separation of oil from the expelled gas.

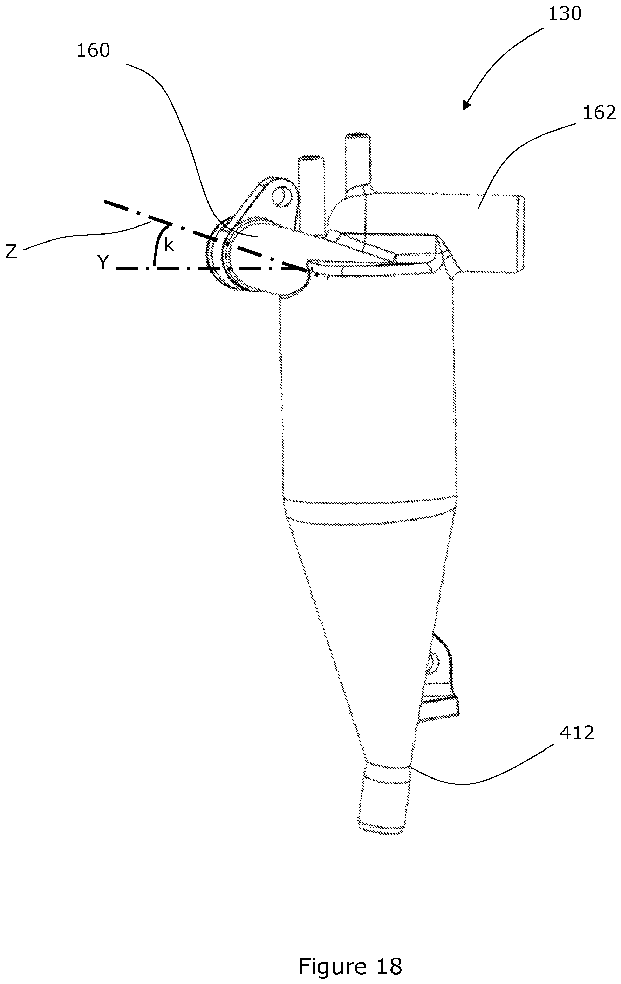

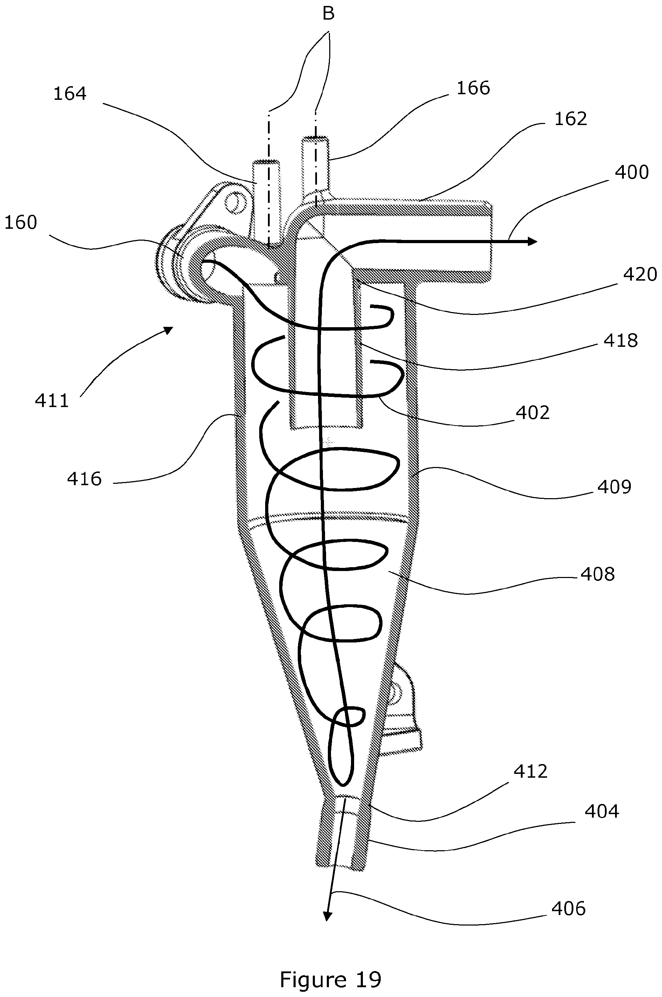

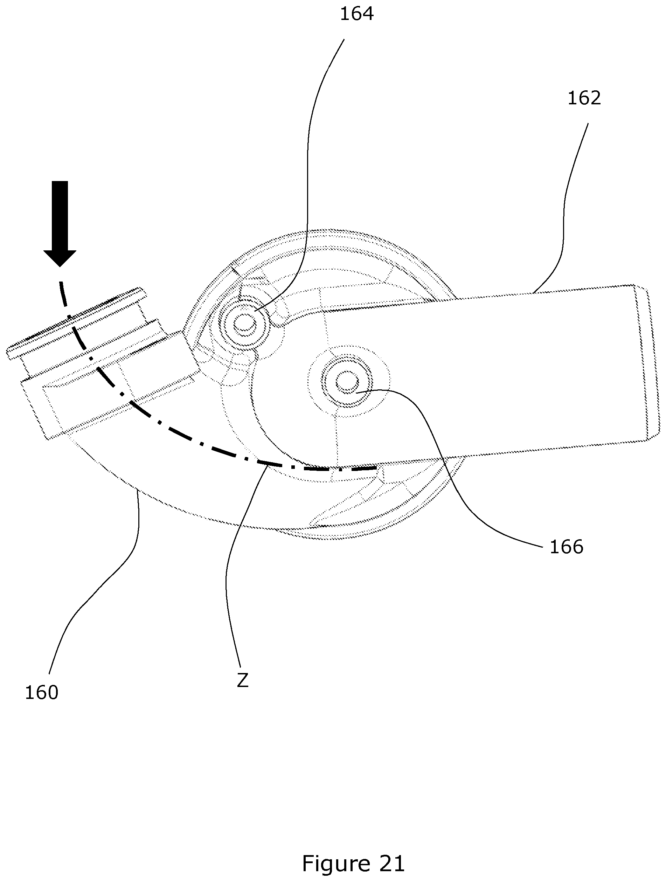

With reference now to Figures 18 to 21, the oil separator is indicated at 130. The oil separator 130 is arranged to receive the expelled gas from the crankcase 104. As stated above, in this embodiment, the oil separator 130 is a cyclonic oil separator. The oil separator 130 being cyclonic causes the flow of expelled gas through it to form a vortex. The flow of expelled gas through the separator 130 is shown in Figure 19, indicated by the arrow 400. As shown in Figure 19, the expelled gas enters the separator 130 through the inlet 160, and forms a vortex 402. The expelled gas then exits the oil separator 130 via the outlet 162.

The centrifugal effect of the vortex 402 separates the oil from the expelled gas, causing the separated oil to be flung to a wall 409 of the separator 130. The separated oil runs down the wall 409 to exit the separator via an oil outlet 404, as indicated in Figure 19 by the arrow 406. The oil is then returned to the oil sump 122 for reuse.

Use of a cyclonic oil separator allows the oil separator 130 to be a passive component. Positively, such a passive component is simple and advantageously requires no external power source in order to provide a reduction of the concentration of oil in the expelled gas. A cyclonic oil separator such as the oil separator 130 is more effective when used in a gaseous fuel engine of the type of this embodiment, when compared to e.g. a diesel engine, due to higher gas flow rate, as described in further detail below.

The oil separator 130 has a first, upper end 411 and a second, lower end 413. The terms "upper" and "lower" relate to the relative position of the separator ends 411, 413 when the separator 130 is mounted in the ventilation system 110.

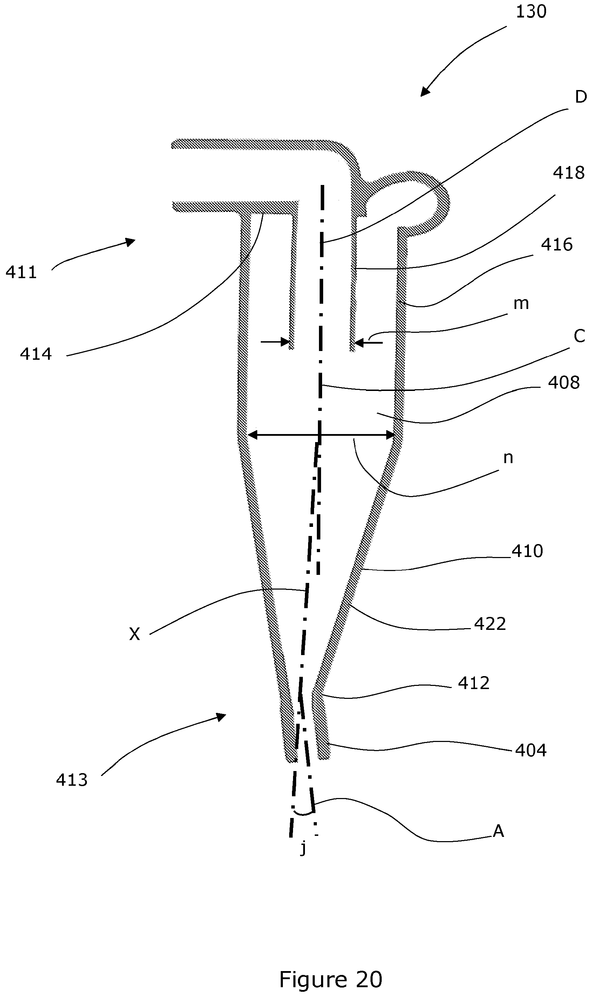

The oil separator 130 defines an internal chamber 408. As shown in Figure 20, the chamber 408 has truncated cone portion 410. The truncated cone portion 410 defines a truncated cone portion longitudinal axis X. The truncated cone portion 410 has an apex 412 located towards the second end 413. The chamber 408 has a roof 414 towards the first end 411 of the separator 130. The roof defines a roof plane Y, shown in Figure 18.

The inlet 160 defines an inlet longitudinal axis Z. The inlet longitudinal axis Z is oriented at a non-zero angle to the roof plane Y at the point at which the inlet 160 meets the chamber 408. That is, the inlet longitudinal axis Z is not parallel to the roof plane Y at the point at which the inlet 160 meets the chamber 408, as shown at angle k in Figure 18.

The inlet longitudinal axis Z is oriented towards the apex 412, i.e. towards the second end 413 of the chamber 408. Such an orientation of the inlet 160 directs expelled gas flow towards the apex 412. It has been found that an inlet 160 oriented towards the apex 412 of the chamber 408 improves the flow of the expelled gas through the chamber 408, by directing flow of gas towards the apex. In addition, this angle enables the oil separator 130 to be packaged between the pump 114, associated hoses and the engine structure 102 and the gearcase 109 as described above.

In this embodiment, the inlet longitudinal axis Z is oriented at an angle k of between 1° and 45° to the roof plane Y. In one embodiment, the inlet longitudinal axis Z is oriented at an angle k of between 10° and 35° to the roof plane Y. It has been found that the inlet longitudinal axis Z being at an angle within this range to the roof plane Y advantageously leads to a reduction in cyclone pressure drop whilst maintaining oil separation efficiency, and so to improved separation of oil from the expelled gas.

In this embodiment the oil outlet 404 is substantially cylindrical and defines an outlet longitudinal axis A (see Figure 20). The oil outlet 404 is at the second end 413 of the separator 130. Gravity therefore causes the separated oil to exit the chamber 408 via the outlet 404. In this embodiment, the outlet longitudinal axis A is at an angle j (see Figure 20) to the truncated cone longitudinal axis X in the range of 0° to 45°. In this embodiment, the outlet 404 is between 10 and 50 mm in length.

Figure 19 shows the first and second pressure take-off points 164, 166. In this embodiment, as shown in Figure 19, the first and second transducer take-off points 164, 166, are located at the first end 411 of the separator 130. In this embodiment, the first and second transducer take-off points 164, 166 each define a take-off point longitudinal axis B. In this embodiment, the take-off point longitudinal axes B are substantially parallel to one another. As stated above, the first and second take-off points 164, 166 are adjacent to one another. That is, the first and second take-off points 164, 166 are located at the same end of the separator 130, and are not separated by any other component.

As discussed above with reference to Figure 2, the monitoring system 167 includes at least one pressure transducer 169 in fluid flow communication with the first and second pressure take-off points 164, 166. In this embodiment, the single pressure transducer 169 is mounted remotely from the separator. That is, the transducer 169 is mounted to the inlet 344 in this embodiment, here it may be less exposed to vibrations.

In an alternative embodiment, where the monitoring system 167 includes two pressure transducers, both are mounted to inlet manifold 344 In an alternative embodiment, the pressure transducer or transducers 169 are mounted to the oil separator 130. Advantageously, such an arrangement is compact and reduces the number of parts required.

With reference to Figures 19 and 20, the chamber 408 comprises a cylindrical portion 416. The cylindrical portion 416 is contiguous with the truncated cone portion 410. The cylindrical 416 and the truncated cone portion 410 together define the chamber 408. The cylindrical portion 416 is distal the apex 412, i.e. the cylindrical portion 416 is proximal the first end 411 of the separator 130.

The cylindrical portion 416 defines a cylindrical portion longitudinal axis C. The angle between the truncated cone section longitudinal axis X and the cylindrical portion longitudinal axis C is in this embodiment is in the range of 0° to 30°. This angling also assists in the packaging of the oil separator 130 in the space envelope as described above. The angling has been found not to appreciably diminish the separation efficiency of the oil separator.

The length of the cylindrical portion 416 is in this embodiment in the range of 50mm to 200mm. The inner diameter of the cylindrical portion 416 is in the range of 30mm to 80mm. That is, the maximum inner diameter of the chamber 408 is in the range of 30mm to 80mm.

In this embodiment, the length of the truncated cone portion 410 is in the range of 50mm to 200mm. "Length" is used to refer to the distance in the direction of the respective longitudinal axis of each feature.

In this embodiment, the gas outlet 162 comprises a tube 418 that extends within the chamber 408. The tube 418 defines a tube longitudinal axis D (shown in Figure 20). In this embodiment, the tube longitudinal axis D is co-axial with the cylindrical portion longitudinal axis C. In an alternative embodiment, the tube longitudinal axis D is at an angle of 10 degrees or less to the cylindrical portion longitudinal axis C. In an alternative embodiment, the tube longitudinal axis D is at an angle of 5 degrees or less to the cylindrical portion longitudinal axis C. In an alternative embodiment, the tube longitudinal axis D is substantially parallel to the cylindrical portion longitudinal axis C as in this embodiment, although when parallel to the cylindrical portion longitudinal axis C the tube longitudinal axis D is not necessarily co-axial with the cylindrical portion longitudinal axis C.

In this embodiment, the tube 418 is a substantially cylindrical tube. In alternative embodiments, the tube is of some other cross-sectional profile. In this embodiment, the tube outer diameter m is in the range of 17-45mm.

In this embodiment, the tube 418 has a length of between 25mm and 75mm. In this embodiment, the tube 418 extends within the chamber 408 for between a quarter and a third of the length of the chamber 408. In alternative embodiments (not shown), the tube 418 may extend within the chamber 408 for between a quarter and a third of the length of the cylindrical portion 416.

The outlet 162 comprises in this embodiment an outlet aperture 420 defined by the chamber 408, i.e. the outlet aperture 420 is at a wall of the chamber 408. In this embodiment, the outlet aperture 420 is located at the first end 411 of the separator 130, i.e. at the upper end of the chamber 408, distal the apex 412.

In this embodiment, as shown in Figures 18, 19, 20 and 21, truncated cone portion longitudinal axis X passes through a plane defined by the maximum diameter of the truncated cone portion 410 at an angle that is not a right angle to further improve the packaging in the location described above. In an alternative embodiment, the truncated cone portion is a right circular truncated cone portion.

The truncated cone portion 410 has a wall 422. The angle of the conical portion wall 422 to the cylindrical portion longitudinal axis C is in the range of 0° to 30°.

As discussed above, the ventilation system 110 comprises a controller 150 arranged to control the output of the pump 114 based on one more determined operating parameters of the engine 100. The flowrate of the expelled gas (and as a consequence the ventilation gas) can thus be controlled by controlling the pump 114.

In this embodiment, the controller 150 is configured to control the pump 114 such that the maximum rate of expelled gas is at an engine speed of 1000 to 2500 rpm. In one embodiment, the controller is configured to control the pump such that the maximum flow rate of expelled gas is at an engine speed of 1100 to 1400 rpm. In this embodiment, the controller 150 is configured to control the pump 114 such that the maximum flow rate of expelled gas is at an engine speed of 1150-1200 rpm.

At a flowrate of the expelled gas through the separator 130 of at least 30 litres per minute per litre of engine displacement (i.e. at least around 130l/min for the 4.4l engine of this embodiment), a reduction in oil concentration within the expelled gas of a factor of at least 10 is achieved. In an alternative embodiment, at such a flow rate of expelled gas, at least 20 is achieved. In an alternative embodiment, at a flow rate of at least 60l per minute per litre of engine displacement, a reduction in oil concentration within the expelled gas of the factor of at least 10 is achieved. In one embodiment, at such a flow rate of the expelled gas, a factor of at least 20 is achieved.

The particular geometry of the cyclonic separator 130 allows the reduction in oil concentration of these factors to be achieved at these flow rates. As demonstrated above by the dimensions of the chamber 408, the separator 130 is surprisingly able to achieve such a reduction in oil concentration despite being a relatively small size.

The small size benefits the packaging of the oil separator 130 along with the pump 114 in the location described above.

In this embodiment, the engine displacement is in the range of 0.75-1.50L per cylinder. That is, the engine 100 described above is typically suitable for use as the prime mover in a working machine, as set out above.

In this embodiment, the separator 130 is formed from plastics material. In this embodiment, the separator 130 is of moulded portions of material (plastics or otherwise) fitted together. In this embodiment, the separator 130 is of first and second moulded portions fitted together.

In this embodiment, the separator 130 is of plastics composite material exhibiting electrical conductive properties.

In addition to the separator 130 being of a plastics composite material with electrically conductive properties, one or more, or all of the ancillary components of the ventilation system 110 are in this embodiment are of the same plastics composite material with electrically conductive properties. The composite material is configured for the dissipation of electrostatic charge. The conductive properties of the composite material allows electrostatic charge to dissipate through the ventilation system 110. The likelihood of a spark being produced is thus minimised. By forming components of such a composite material, electrical connection of the components is provided, allowing all of the components of the system 110 to stay at the same electrostatic charge, whilst advantageously avoiding the need for external wires.

In this embodiment, one or more of the following ancillary components is of the composite material: the oil pre-separator 128, the oil-separator 130, a manifold (such as the vortex generator 190) the conduits, 146a, 146b, and the pump housing 172.

In this embodiment, the composite material is of conductive material that is embedded within plastics material. In an alternative embodiment, the plastics material is at least partially coated with conductive material. That is, the plastics material may be entirely internally coated with conductive material, or the plastics material may be partially coated with conductive material on an internal surface (and surfaces in contact with adjoining components to maintain continuity), such that electrical continuity is provided between components. In this embodiment, the composite material comprises between 20% and 40% conductive material. In an alternative embodiment, the composite material comprises between 25% and 35% conductive material. In one embodiment, the composite material comprises substantially 30% conductive material. In this embodiment, the composite material is that known as PA66 CF30, i.e. PA66 polyamide with 30% carbon fibre. In alternative embodiments, the conductive material is some material other than carbon fibre. In some other embodiments the conductive material is some other percentage of carbon fibre. In one embodiment, the conductive material is graphite. In one embodiment, the conductive material is a metallic conductive material.

In this embodiment, the conductive material is formed of strands. That is, the conductive material is of wired portions. In an alternative embodiment, the conductive material is in the form of powder. In one embodiment, the conductive material is in the form of graphite powder.

Such a composite material provides some electrical insulation of components, but insulation is reduced to the point where the material is sufficiently conductive to avoid an accumulation of static charge. That is, insulation is reduced to the point where dispersal of static electricity is allowed.

The use of composite plastics material advantageously allows for variable wall thickness, and the desired wall thickness for the ancillary components.

In this embodiment, where all of the ancillary components comprise the composite material described, the ventilation system 110 has electrical continuity throughout the system 110.

The engine 100 may additionally have an electrical conductivity monitoring system for monitoring electrical conductivity of the ventilation system 110. In this embodiment, the electrical conductivity monitoring system has at least one sensor for detecting electrical conductivity. In this embodiment, the electrical conductivity monitoring system (not shown) includes a series of electrical conductivity sensors throughout the system 110.

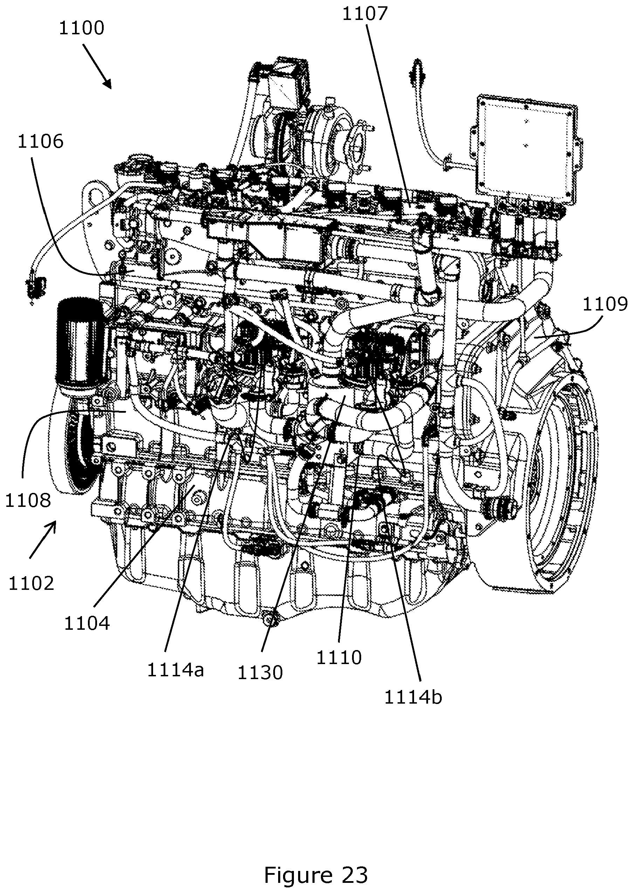

Figures 23 to 28 illustrate another embodiment of the ventilation system 1110, in which similar parts are labelled with similar reference numerals, but with the prefix "1". Only those parts that differ from the ventilation system 110 of the first embodiment are discussed in more detail.

Figure 23 shows an engine 1100 incorporating the ventilation system 1110. In contrast to the engine 100 of the first embodiment, the engine 1100 is an inline six cylinder engine, rather than a four cylinder, but otherwise the basic layout and construction thereof is similar to the engine 100.

By virtue of the greater number of cylinders, and in some embodiments a greater specific output, the engine 1100 may generate a greater volume of blow-by gases under similar operating conditions, compared to the engine 100. Thus, to dilute and transport the blow-by gases out of the engine 1100, a larger capacity ventilation system 1110 is required.

In addition, to minimise oil (and water) carry-over back into the intake system 115, a greater capacity for separation may also be needed.

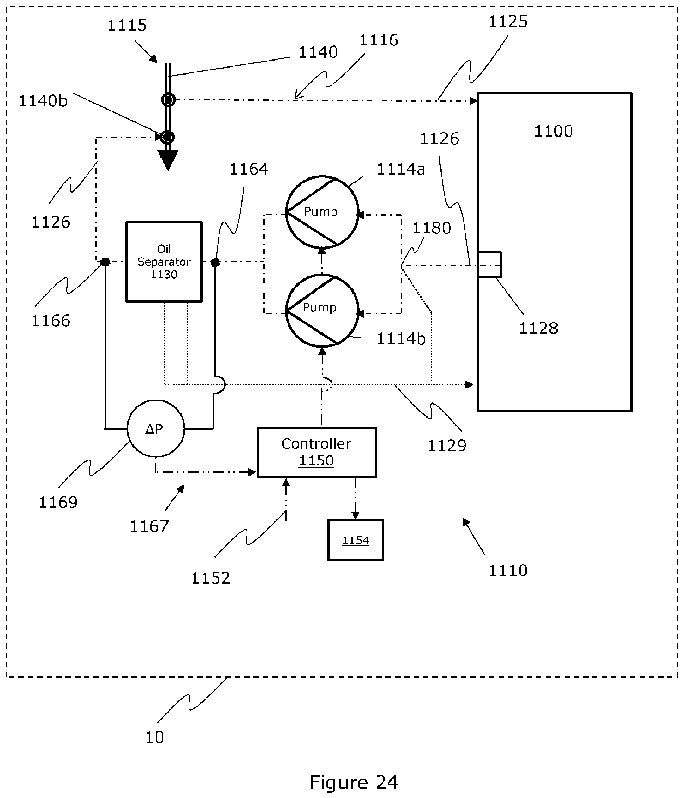

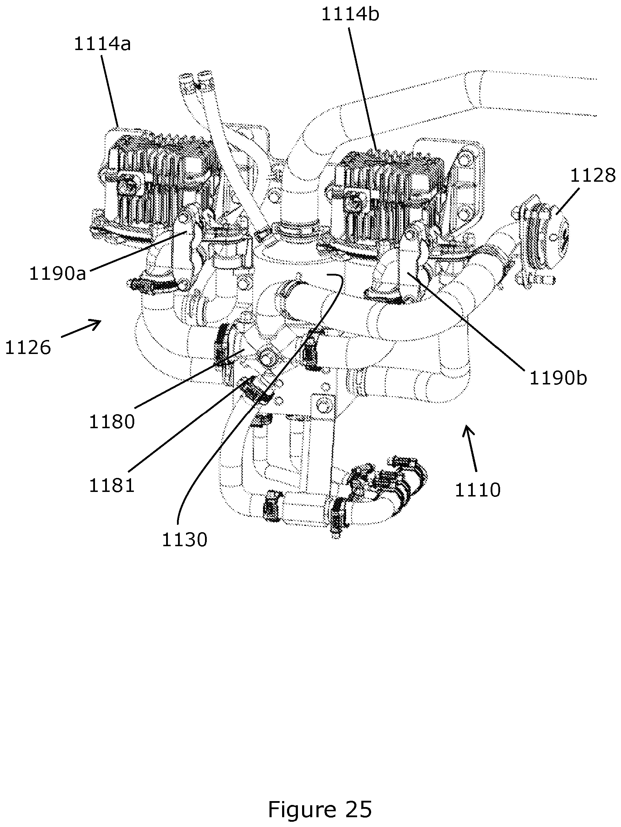

Figure 24 illustrates the ventilation system 1110 of this embodiment in a similar manner to that of the first in Figure 2, except that the engine 1100 and intake system 1115 are shown in a more simplified form. Figure 25 illustrates the physical layout of the ventilation system 1110 as installed on the engine 1100.

From Figures 24 and 25 it can be seen that the ventilation system comprises two pumps 1114a and 1114b arranged in parallel, downstream of the pre-separator 1128, in order to increase the flow of ventilation gas. The outflow path 1126 comprises a flow divider 1180 in the form of a Y-piece 1180 to evenly divide the flow of expelled gas to each pump 1114a, b.

The expelled gas then flows from pump outlets 1178a, 1178b into corresponding oil separator inlets 1160a, 1160b and re-joins, in this embodiment, in the oil separator 1130. Downstream of the oil separator 1130 the expelled gas returns to the intake passage 1140 without being directed back through passages in the engine 1100, but rather via a pipe external to the engine 1100.

With reference to Figure 25, it can be seen that this outflow portion is substantially symmetrical so that the flow to each pump is substantially equal. Further, it should be noted that the path drops to reach the Y-piece 1180, rises before entering each pump 1114a, b, drops from the pumps into the bottom of the oil separator 1130 and then rises again through the oil separator and back into the intake passage 1140. This has been found to naturally assist in causing the oil to separate from the expelled gas, via the multiple changes of direction.

In this embodiment, the pumps 1114a, b are each the same as the single pump 114 of the first embodiment, and also comprise vortex generators 1190a, 1190b that are the same as the generator 190 of the first embodiment. However, the pumps 1114a, b are orientated with their rotational axes vertical, rather than horizontal (i.e. substantially parallel to the axis on which the pistons of the engine 1100 move in their respective cylinders). This results in the impellers of the pumps being substantially horizontal, which has been found to assist in the draining of oil that precipitates out from the expelled gas from the pumps 1114a, b.

From Figure 25, it can be seen that the Y-piece 1180 also includes an oil drain outlet 1181 at a bottom thereof so that oil precipitating in the pumps 1114a, b, the pipework to the pumps, and between the pre-separator 1128 and Y-piece 1180 may drain away.

In contrast to the first embodiment, the oil separator 1130 of this embodiment is a labyrinth type separator.

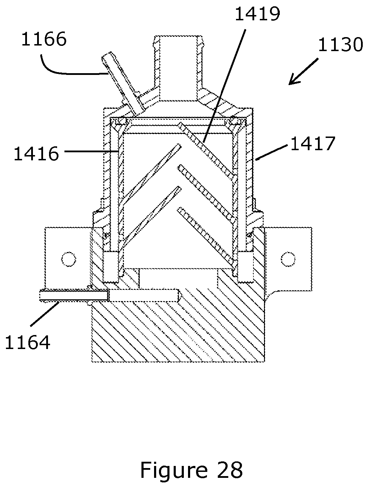

Figures 26, 27 and 28 depict vertical cross-sections through the oil separator 1130, which are identical for an upper part thereof (which is through the centre) and deviate into separate, but parallel planes from each other in a lower part. In Figure 26, the lower part is also through the centre, but in Figure 27 the portion below the horizontal dashed line is on a plane parallel to Figure 26 but offset out of the paper and in Figure 28 the lower part is parallel but offset into the paper.

The oil separator 1130 is substantially cylindrical with its axis being substantially vertical. In this embodiment, the oil separator 1130 is mounted mid-way between the pumps 1114a, b. The oil separator includes an outer housing 1417 and an inner wall 1416 spaced therefrom. The inner wall defines an internal chamber 1408 within it and an annular space 1415 between it and the outer housing 1417. The oil separator inlets 1160a, b are located proximate the bottom of the oil separator 1130 and a single gas outlet 1162 is provided at the top of the internal chamber 1408, such that in use the flow of expelled gas is directed generally upwardly.

An array of baffles 1419 are located within the internal chamber 1408, extending from opposing sides of the inner wall 1416 in an alternating fashion. Each baffle 1419 is upwardly inclined to its free end and each free end overlaps the free end of the those above and/or below which extend from the opposing side and divert the flow of expelled gas into a labyrinthine path.

Drainage holes 1421 are provided immediately above where each baffle 1419 joins the inner wall 1416 such that oil impinging on the baffles 1419 and the inner wall 1416 drains into the annular space 1415 between the inner wall and the outer housing. It will be appreciated that in other embodiments, the number, shape and configuration may be altered as required.

The oil that accumulates in the annular space is able to drain via an oil drain outlet 1404a under gravity. A second oil drain outlet 1404b allows oil than accumulates in the internal chamber 1408 and the pipework between the pumps 1114a and 1114b and the separator inlets 1160a, b to also drain under gravity.

Similar to the oil separator 130 if the first embodiment, the separator 1130 has pressure take-off points 1164 and 1166 proximate the inlets 1160a and 1160b and the gas outlet 1162 respectively so that a pressure drop across the oil separator may be measured as a way of determining a flow rate of the expelled gas.

In this embodiment the oil separator operates by a combination of reducing the velocity of the expelled gas, changing its flow direction and having a large surface area such that oil droplets tend to fall out of suspension and precipitate on the baffles 1419 and inner wall 1416.

With reference to Figures 23, 24 and 25 the oil drain outlets 1181, 1404a, 1404b feed into an oil return passage 1129 which returns the oil to the crankcase 1104.

In other embodiments, it shall be appreciated that the pump 114 of the first embodiment may be used in conjunction with the labyrinth type separator 1130 described above and the pumps 1114a, b above may be used in conjunction with the oil separator 130 of the first embodiment.

It will be appreciated that the output of the pumps 1114a, b may be controlled by a controller 1150 in a similar way to the pump 114 being controlled by the controller 150 as described above and with reference to Figures 9A and 9B, and utilising the pressure drop across the oil separator 1130.

The one or more embodiments are described above by way of example only and it will be appreciated that the variations are possible without departing from the scope of protection afforded by the appended claims.

## Claims

1. A gaseous fuel internal combustion engine (100) comprising:
an engine structure (102) comprising:
a cylinder block (108),
a crankcase (104), and
a gearcase (109);
a pump (114) to expel blow-by gas contained within the crankcase (104) and positioned adjacent to the engine structure (102); and
a passage (126) extending from one of the crankcase (104) and gearcase (109) to the pump (114), such that the pump (114) is in fluid flow communication with the crankcase (104),
wherein the gearcase (109) is rearward of the crankcase (104) and cylinder block (108), and
**characterised in that**
the pump (114) is positioned adjacent a side of the cylinder block (108), forward of the gearcase (109).

2. The engine (100) of claim 1 wherein the pump (114) is mounted to the engine structure (102).

3. The engine (100) of claim 1 or claim 2 wherein the gearcase (109) extends transversely a greater distance than at least the cylinder block (108), and the pump (114) is at least partially positioned within a space envelope defined by a virtual longitudinal projection forward of the gearcase (109); optionally wherein the pump (114) is fully mounted within the envelope.

4. The engine (100) of any preceding claim, further comprising one or more ancillary components mounted to the engine structure (102), such as one or more of a lubrication oil filler (341), a lubrication oil cooler (343), an inlet manifold (344), and/or an electronic control unit (346), and the pump (114) projects transversely less than or equal to the maximum width of the one or more of the ancillary components.

5. The engine (100) of any preceding claim, wherein the pump (114) occupies a space envelope less than or equal to 200mm in a longitudinal direction (x) and/or 240mm in a vertical direction (z) and/or 175mm in a transverse direction (y).

6. The engine (100) of any preceding claim, wherein the passage (126) comprises an oil pre-separator (128) upstream of the pump (114); optionally wherein the oil pre-separator (128) is mounted adjacent to the engine structure (102) (e.g. the gearcase (109)).

7. The engine (100) of any preceding claim wherein the passage (126) extends between the pump (114) and an aperture (315) in the gearcase (109); optionally wherein the aperture (315) is in a forward-facing wall (314) of the gearcase (109); and/or wherein the aperture (315) is above a cam gear (340) mounted to engine camshaft.

8. The engine (100) of claim 7, wherein the passage (126) terminates in an oil pre-separator (128) located within the gearcase (109); optionally wherein the pre-separator (128) comprises a withdrawal conduit (310) defining a mouth (312) for the withdrawal of gases from the gearcase (109), and a plate (316) spaced axially from and overlying an opening of the withdrawal conduit (310).

9. The engine (100) of claim 8, wherein the plate (316) comprises an angled portion (322) arranged to extend from the axially spaced position and terminate at an edge at least axially aligned with or axially overlapping the mouth (312) and the edge being transversely spaced therefrom, optionally wherein the plate (316) comprises a planar portion (326) overlying the mouth (312) and the angled portion (322) extends around a perimeter of the planar portion (326); and/or wherein the mouth (312) terminates in an out-turned lip (332).

10. The engine (100) of claim 8 or claim 9, wherein the pre-separator (128) comprises a flow diverter (328) extending around at least a portion of the withdrawal conduit (310) to divert oil running down the wall (314) of the gearcase (109) away from the opening of the withdrawal conduit (310).

11. The engine (100) of any preceding claim, wherein the pump inlet (174, 176) faces transversely outwards; and/or wherein the pump (114) comprises an impeller and an impeller rotation axis arranged substantially longitudinally of the engine (100); and/or wherein the pump (114) is a side channel pump; optionally wherein the side channel pump (114) comprises first and second inlets (174, 176) with corresponding first and second vortex generators (192, 194) immediately upstream of the first and second inlets (174, 176), and/or a substantially right angle diversion of flow in the conduit immediately upstream of the inlets (174, 176); optionally wherein the vortex generators (192, 194) are located at an end of the passage (126).

12. The engine (100) of any preceding claim further comprising an oil separator (130) in fluid flow communication with and downstream of the pump (114); optionally wherein the oil separator (130) is located longitudinally between the forward facing wall (314) of the gearcase (109) and the pump (114); optionally wherein the longitudinal dimension of the space envelope occupied by the pump (114) and the oil separator (130) is less or equal to 200mm; and/or wherein the oil separator (130) comprises a gas outlet (162) and wherein a conduit (126) extends from the gas outlet (162) into a separate chamber in the gearcase (109); and/or wherein the oil separator (130) further comprises an oil outlet (404), and wherein a conduit (129) extends from the oil outlet (404) back to the crankcase (104) or gearcase (109).

13. The engine (100) of any preceding claim, wherein the pump (114) is a self-contained unit with drive motor, e.g. electric drive motor.

14. The engine (100) of any preceding claim, wherein the gaseous fuel is hydrogen.

15. An internal combustion engine (100) configurable in a selected one of a first configuration according to any preceding claim as a gaseous fuel, e.g. hydrogen powered engine, and a second configuration as a liquid fuel, e.g. diesel or gasoline powered engine, wherein in the second configuration in place of the pump (114) to exhaust expelled gas comprising ventilation gas and blow-by gas from the crankcase (104), a fuel injection pump is mounted adjacent to the engine structure (102) in the space otherwise occupied by the pump (114) to transport expelled gas; optionally wherein an aperture (315) is provided in a wall (314) of the gearcase (109) for connection of a conduit (126a) to the pump (114) to transport blow-by gas in the first configuration and for a drive from the gearcase (109) to the fuel injection pump in the second configuration.

## Patentansprüche

1. Brennkraftmaschine mit gasförmigem Brennstoff (100), umfassend:
eine Maschinenstruktur (102), umfassend:
einen Zylinderblock (108),
ein Motorgehäuse (104), und
ein Getriebegehäuse (109);
eine Pumpe (114) zum Ausstoßen von Blow-by-Gas, die im Motorgehäuse (104) enthalten ist und neben der Maschinenstruktur (102) positioniert ist; und
einen Durchgang (126), der sich von einem des Motorgehäuses (104) und Getriebegehäuses (109) zur Pumpe (114) erstreckt, sodass die Pumpe (114) mit dem Motorgehäuse (104) in Fluidströmungskommunikation steht;
wobei das Getriebegehäuse (109) hinter dem Motorgehäuse (104) und dem Zylinderblock (108) gelegen ist, und
**dadurch gekennzeichnet, dass**
die Pumpe (114) neben einer Seite des Zylinderblocks (108), vor dem Getriebegehäuse (109) positioniert ist.

2. Maschine (100) nach Anspruch 1, wobei die Pumpe (114) an der Maschinenstruktur (102) angebracht ist.

3. Maschine (100) nach Anspruch 1 oder Anspruch 2, wobei sich das Getriebegehäuse (109) querverlaufend in einem größeren Abstand als zumindest der Zylinderblock (108) erstreckt und die Pumpe (114) zumindest teilweise innerhalb einer Raumhülle positioniert ist, die durch eine virtuelle Längsprojektion des Getriebegehäuses (109) nach vorne definiert ist; wobei die Pumpe (114) wahlweise vollständig innerhalb der Hülle angebracht ist.

4. Maschine (100) nach einem vorstehenden Anspruch, weiter umfassend eine oder mehrere Hilfskomponenten, die an der Maschinenstruktur (102) angebracht sind, wie etwa eines oder mehrere von einem Schmierölfüller (341), einem Schmierölkühler (343), einem Einlassverteiler (344) und/oder einer elektrischen Steuereinheit (346), und die Pumpe (114) steht querverlaufend weniger als oder ebenso sehr wie die maximale Breite der einen oder mehreren der Hilfskomponenten hervor.

5. Maschine (100) nach einem vorstehenden Anspruch, wobei die Pumpe (114) eine Raumhülle einnimmt, die kleiner oder gleich 200mm in einer Längsrichtung (x) und/oder 240mm in einer vertikalen Richtung (z) und/oder 175mm in einer querverlaufenden Richtung (y) beträgt.

6. Maschine (100) nach einem vorstehenden Anspruch, wobei der Durchgang (126) einen Ölvorabscheider (128) stromaufwärts der Pumpe (114) umfasst; wobei der Ölvorabscheider (128) wahlweise neben der Maschinenstruktur (102) (z.B. dem Getriebegehäuse (109)) angebracht ist.

7. Maschine (100) nach einem vorstehenden Anspruch, wobei sich der Durchgang (126) zwischen der Pumpe (114) und einer Aussparung (315) im Getriebegehäuse (109) erstreckt, wobei die Aussparung (315) wahlweise in einer nach vorne gerichteten Wand (314) des Getriebegehäuses (109) gelegen ist; und/oder wobei die Aussparung (315) oberhalb eines Nockenwellenantriebs (340) gelegen ist, der an der Maschinennockenwelle angebracht ist.

8. Maschine (100) nach Anspruch 7, wobei der Durchgang (126) in einen Ölvorabscheider (128) mündet, der sich innerhalb des Getriebegehäuses (109) befindet, wobei der Vorabscheider (128) wahlweise eine Abzugsleitung (310), die eine Mündung (312) für den Abzug von Gasen aus dem Getriebegehäuse (109) definiert, und eine Platte (316), die axial von einer Öffnung der Abzugsleitung (310) beabstandet ist und diese überlagert, umfasst.

9. Maschine (100) nach Anspruch 8, wobei die Platte (316) einen gewinkelten Abschnitt (322) umfasst, der so angeordnet ist, dass er sich von der axial beabstandeten Position erstreckt und in eine Kante zumindest axial mit der Mündung (312) ausgerichtet oder diese überlagernd mündet, und wobei die Kante querverlaufend davon beabstandet ist, wobei die Platte (316) wahlweise einen ebenen Abschnitt (326) umfasst, der die Mündung (312) überlagert, und der gewinkelte Abschnitt (322) sich um einen Umfang des ebenen Abschnitts (326) erstreckt, und/oder wobei die Mündung (312) in eine nach außen gedrehte Lippe (332) mündet.

10. Maschine (100) nach Anspruch 8 oder Anspruch 9, wobei der Vorabscheider (128) einen Strömungsumlenker (328) umfasst, der sich um zumindest einen Abschnitt der Abzugsleitung (310) erstreckt, um Öl, das die Wand (314) des Getriebegehäuses (109) herunterläuft, von der Öffnung der Abzugsleitung (310) wegzulenken.

11. Maschine (100) nach einem vorstehenden Anspruch, wobei der Pumpeneinlass (174, 176) querverlaufend nach außen gerichtet ist; und/oder wobei die Pumpe (114) ein Antriebsrad und eine Antriebsrad-Drehachse, die im Wesentlichen längslaufend zur Maschine (100) angeordnet ist, umfasst; und/oder wobei die Pumpe (114) eine Seitenkanalpumpe ist; wobei die Seitenkanalpumpe (114) wahlweise einen ersten und einen zweiten Einlass (174, 176) mit einem jeweiligen ersten und zweiten Wirbelerzeuger (192, 194) unmittelbar stromaufwärts des ersten und zweiten Einlasses (174, 176) und/oder eine im Wesentlichen rechtwinklige Strömungsumlenkung in der Rohrleitung unmittelbar stromaufwärts der Einlässe (174, 176) umfasst, wobei sich die Wirbelerzeuger (192, 194) wahlweise an einem Ende des Durchgangs (126) befinden.

12. Maschine (100) nach einem vorstehenden Anspruch, weiter umfassend einen Ölabscheider (130) in Fluidströmungskommunikation mit und stromabwärts der Pumpe (114); wobei sich der Ölabscheider (130) wahlweise längslaufend zwischen der nach vorne gerichteten Wand (314) des Getriebegehäuses (109) und der Pumpe (114) befindet; wobei die Längsabmessung der Raumhülle, die von der Pumpe (114) und dem Ölabscheider (130) eingenommen wird, wahlweise kleiner oder gleich 200m beträgt; und/oder wobei der Ölabscheider (130) einen Gasauslass (162) umfasst und wobei sich eine Rohrleitung (126) vom Gasauslass (162) in eine separate Kammer im Getriebegehäuse (109) erstreckt; und/oder wobei der Ölabscheider (130) weiter einen Ölauslass (404) umfasst und wobei sich eine Rohrleitung (129) vom Ölauslass (404) zurück zum Motorgehäuse (104) oder Getriebegehäuse (109) erstreckt.

13. Maschine (100) nach einem vorstehenden Anspruch, wobei die Pumpe (114) eine eigenständige Einheit mit einem Antriebsmotor, z.B. elektrischen Antriebsmotor, ist.

14. Maschine (100) nach einem vorstehenden Anspruch, wobei es sich bei dem gasförmigen Brennstoff um Wasserstoff handelt.

15. Brennkraftmaschine (100), die in einer ausgewählten aus einer ersten Konfiguration nach einem vorstehenden Anspruch als mit gasförmigem Brennstoff, z.B. mit Wasserstoff, angetriebene Maschine und einer zweiten Konfiguration als mit Flüssigbrennstoff, z.B. mit Diesel oder Benzin, angetriebene Maschine konfigurierbar ist, wobei in der zweiten Konfiguration, anstelle der Pumpe (114) zum Ablassen von ausgestoßenem Gas, umfassend Belüftungsgas und Blow-by-Gas, aus dem Motorgehäuse (104), eine Brennstoffeinspritzpumpe neben der Maschinenstruktur (102) im Raum, der sonst von der Pumpe (114) eingenommen wird, zum Weiterleiten von ausgestoßenem Gas angebracht ist; wobei wahlweise eine Aussparung (315) in einer Wand (314) des Getriebegehäuses (109) für eine Verbindung einer Rohrleitung (126a) mit der Pumpe (114) zum Weiterleiten von Blow-by-Gas in der ersten Konfiguration und für einen Antrieb vom Getriebegehäuse (109) zur Brennstoffeinspritzpumpe in der zweiten Konfiguration bereitgestellt ist.

## Revendications

1. Moteur (100) à combustion interne à carburant gazeux comprenant :
une structure de moteur (102) comprenant :
un bloc-cylindres (108),
un carter de moteur (104), et
un carter de transmission (109) ;
une pompe (114) pour expulser le gaz perdu contenu dans le carter de moteur (104) et positionnée adjacente à la structure de moteur (102) ; et
un passage (126) s'étendant depuis l'un parmi le carter de moteur (104) et le carter de transmission (109) jusqu'à la pompe (114), de sorte que la pompe (114) est en communication d'écoulement de fluide avec le carter de moteur (104),
dans lequel le carter de transmission (109) est en arrière du carter de moteur (104) et du bloc-cylindres (108), et
**caractérisé en ce que**
la pompe (114) est positionnée adjacente à un côté du bloc-cylindres (108), en avant du carter de transmission (109).

2. Moteur (100) selon la revendication 1 dans lequel la pompe (114) est montée sur la structure de moteur (102).

3. Moteur (100) selon la revendication 1 ou revendication 2 dans lequel le carter de transmission (109) s'étend transversalement sur une distance plus grande qu'au moins le bloc-cylindres (108), et la pompe (114) est positionnée au moins partiellement dans une enveloppe d'espace définie par une projection longitudinale virtuelle en avant du carter de transmission (109) ; facultativement, dans lequel la pompe (114) est entièrement montée dans l'enveloppe.

4. Moteur (100) selon une quelconque revendication précédente, comprenant en outre un ou plusieurs composants auxiliaires montés sur la structure de moteur (102), tels qu'un ou plusieurs parmi un remplisseur d'huile de lubrification (341), un refroidisseur d'huile de lubrification (343), un collecteur d'admission (344) et/ou une unité de commande électronique (346), et la pompe (114) se projette transversalement sur une distance inférieure ou égale à la largeur maximale des un ou plusieurs des composants auxiliaires.

5. Moteur (100) selon une quelconque revendication précédente, dans lequel la pompe (114) occupe une enveloppe d'espace inférieure ou égale à 200 mm dans une direction longitudinale (x) et/ou 240 mm dans une direction verticale (z) et/ou 175 mm dans une direction transversale (y).

6. Moteur (100) selon une quelconque revendication précédente, dans lequel le passage (126) comprend un pré-séparateur d'huile (128) en amont de la pompe (114) ; facultativement, dans lequel le pré-séparateur d'huile (128) est monté adjacent à la structure de moteur (102) (par exemple, le carter de transmission (109)).

7. Moteur (100) selon une quelconque revendication précédente dans lequel le passage (126) s'étend entre la pompe (114) et une ouverture (315) dans le carter de transmission (109) ; facultativement, dans lequel l'ouverture (315) se situe dans une paroi (314) du carter de transmission (109) orientée vers l'avant ; et/ou dans lequel l'ouverture (315) se situe au-dessus d'un engrenage à cames (340) monté sur un arbre à cames de moteur.

8. Moteur (100) selon la revendication 7, dans lequel le passage (126) se termine dans un pré-séparateur d'huile (128) situé à l'intérieur du carter de transmission (109) ; facultativement, dans lequel le pré-séparateur d'huile (128) comprend un conduit d'extraction (310) définissant une embouchure (312) pour l'extraction des gaz du carter de transmission (109), et une plaque (316) espacée axialement d'une ouverture du conduit d'extraction (310) et surplombant celle-ci.

9. Moteur (100) selon la revendication 8, dans lequel la plaque (316) comprend une portion inclinée (322) agencée pour s'étendre depuis la position axialement espacée et se terminer au niveau d'un bord au moins aligné axialement avec ou chevauchant axialement l'embouchure (312) et le bord étant transversalement espacé de celle-ci, facultativement, dans lequel la plaque (316) comprend une portion plane (326) surplombant l'embouchure (312) et la portion inclinée (322) s'étend autour d'un périmètre de la portion plane (326) ; et/ou dans lequel l'embouchure (312) se termine par une lèvre rabattue vers l'extérieur (332).

10. Moteur (100) selon la revendication 8 ou revendication 9, dans lequel le pré-séparateur d'huile (128) comprend un déviateur d'écoulement (328) s'étendant autour d'au moins une portion du conduit d'extraction (310) pour détourner l'huile s'écoulant le long de la paroi (314) du carter de transmission (109) en l'éloignant de l'ouverture du conduit d'extraction (310).

11. Moteur (100) selon une quelconque revendication précédente, dans lequel l'entrée de pompe (174, 176) est tournée transversalement vers l'extérieur; et/ou dans lequel la pompe (114) comprend une roue et un axe de rotation de la roue agencés sensiblement longitudinalement au moteur (100) ; et/ou dans lequel la pompe (114) est une pompe à canal latéral ; facultativement, dans lequel la pompe (114) à canal latéral comprend des première et deuxième entrées (174, 176) avec des premier et deuxième générateurs de vortex (192, 194) correspondants immédiatement en amont des première et deuxième entrées (174, 176), et/ou une déviation d'écoulement sensiblement à angle droit dans le conduit immédiatement en amont des entrées (174, 176); facultativement, dans lequel les générateurs de vortex (192, 194) se situent au niveau d'une extrémité du passage (126).

12. Moteur (100) selon une quelconque revendication précédente comprenant en outre un séparateur d'huile (130) en communication d'écoulement de fluide avec la pompe (114) et en aval de celle-ci ; facultativement, dans lequel le séparateur d'huile (130) se situe longitudinalement entre la paroi (314) du carter de transmission (109) orientée vers l'avant et la pompe (114) ; facultativement, dans lequel la dimension longitudinale de l'enveloppe d'espace occupée par la pompe (114) et le séparateur d'huile (130) est inférieure ou égale à 200 mm ; et/ou dans lequel le séparateur d'huile (130) comprend une sortie de gaz (162) et dans lequel un conduit (126) s'étend depuis la sortie de gaz (162) jusque dans une chambre séparée dans le carter de transmission (109) ; et/ou dans lequel le séparateur d'huile (130) comprend en outre une sortie d'huile (404), et dans lequel un conduit (129) s'étend depuis la sortie d'huile (404) de retour vers le carter de moteur (104) ou le carter de transmission (109).

13. Moteur (100) selon une quelconque revendication précédente, dans lequel la pompe (114) est une unité autonome pourvue d'un moteur d'entraînement, par exemple un moteur d'entraînement électrique.

14. Moteur (100) selon une quelconque revendication précédente, dans lequel le carburant gazeux est de l'hydrogène.

15. Moteur (100) à combustion interne configurable dans l'une sélectionnée d'une première configuration selon une quelconque revendication précédente en tant que moteur à carburant gazeux, par exemple moteur alimenté à l'hydrogène, et d'une deuxième configuration en tant que moteur à carburant liquide, par exemple moteur alimenté au diesel ou à l'essence, dans lequel dans la deuxième configuration, à la place de la pompe (114) pour évacuer le gaz expulsé comprenant du gaz de ventilation et du gaz perdu depuis le carter de moteur (104), une pompe d'injection de carburant est montée adjacente à la structure de moteur (102) dans l'espace autrement occupé par la pompe (114) pour transporter le gaz expulsé ; facultativement, dans lequel une paroi (314) du carter de transmission (109) est pourvue d'une ouverture (315) pour la liaison d'un conduit (126a) à la pompe (114) pour transporter le gaz perdu dans la première configuration et pour un entraînement depuis le carter de transmission (109) vers la pompe d'injection de carburant dans la deuxième configuration.
